# EUROPEAN PATENT APPLICATION

(11) **EP 3 425 505 A1**
(43) Date of publication of application: **09.01.2019**
(21) Application number: 17759708.5
(22) Date of filing: 20.02.2017
(51) Int. Cl.: G06F 11/00, B60R 16/02

(54) **TERMINAL DEVICE AND SOFTWARE REWRITE PROGRAM**

(30) Priority: 01.03.2016 JP 2016038930
(71) Applicant: Yanmar Co., Ltd., Osaka-shi, Osaka 530-8311 (JP)
(72) Inventor: MATSUO, Masaki, Osaka-shi Osaka 530-8311 (JP); ISHIMOTO, Shintaro, Osaka-shi Osaka 530-8311 (JP); KOJIMA, Yusuke, Osaka-shi Osaka 530-8311 (JP); YAMASHITA, Shunzo, Osaka-shi Osaka 530-8311 (JP)
(74) Representative: Hinkelmann, Klaus
(86) International application number: PCT/JP2017/006093
(87) International publication number: WO 2017/150242

(57) **Abstract**

At a time of storing a software package in a first memory space, a control device sets first read information to a setting memory space. When the updating software package is written in a third memory space, the updating software package is stored in a second memory space, and second read information is set to the setting memory space. At a time of storing the software package in the second memory space, the second read information is set to the setting memory space. When the updating software package is written in the third memory space, the updating software package is stored in the first memory space, and the first read information is set in the setting memory space. The terminal device writes the updating software package in the third memory space.

## Description

### Technical Field

The present invention relates to a terminal device and a software rewriting program for use in a software rewriting system configured to rewrite a software package of a control device (e.g., control device mounted in a movable object such as work machine or a ship).

### Background Art

As a software rewriting system for rewriting a software package of a control device, there is one, for example, which rewrites the software package of the control device based on an updating software package.

### Citation List

### Patent Literature

PTL 1: Japanese Patent No. 4234062

### Summary of Invention

### Technical Problem

Such a software rewriting system is not able to rewrite the software package of the control device while the control device is in an active state (i.e., the while the software package is in operation), because the software package of the control device is operating.

In this regard, Patent Literature 1 (hereinafter, PTL 1) discloses a structure of selecting timings of notification or processing related to updating of the software package based on the priority, when the software package is updatable.

However, the structure of PTL 1 needs to have a user to select whether to rewrite the software package, every time the software package of the control device is rewritten. That is, it is necessary to have the user intentionally make an operation for rewriting the software package, which is not convenient at a time of rewriting the software package of the control device.

In view of the above, it is an object of the present invention to provide a terminal device for use in a software rewriting system configured to rewrite a software package of a control device and software rewriting program, which can reliably rewrite a software package of a control device, without having a user intentionally make an operation of rewriting the software package every time the software package is to be rewritten, thereby enabling an improvement in the convenience at a time of rewriting the software package.

### Solution to Problem

To achieve the above object, a terminal device of a first aspect and a second aspect, and a software rewriting program of a first aspect and a second aspect as hereinbelow described are provided.

### (1-1) A terminal device of first aspect

A terminal device related to a first aspect of the present invention is a terminal device for use in a software rewriting system configured to rewrite a software package of a control device, wherein the control device includes a processing unit, a first memory space, a second memory space, a setting memory space, and a third memory space, and is configured as follows. Namely, while the software package is stored in the first memory space as a readable memory space for the processing unit of the control device to read out the software package, first read information indicating that the software package is readable from the first memory space is set in the setting memory space and the second memory space is set as a non-readable memory space not related to reading of the software package by the processing unit. When an updating software package is written in the third memory space, the updating software package stored in the third memory space is stored in the second memory space. Further, second read information indicating that the software package is readable from the second memory space is set in the setting memory space, and the second memory space is set as the readable memory space while the first memory space is set as the non-readable memory space. While the software package is stored in the second memory space as the readable memory space, the second read information is set in the setting memory space and the first memory space is set as the non-readable memory space. When the updating software package is written in the third memory space, the updating software package stored in the third memory space is stored in the first memory space. Further, the first read information is set in the setting memory space, and the first memory space is set as the readable memory space while the second memory space is set as the non-readable memory space. The terminal device writes the updating software package in the third memory space.

### (1-2) Software rewriting program of first aspect

A software rewriting program of the first aspect related to the present invention is A software rewriting program of a terminal device for use in a software rewriting system configured to rewrite a software package of a control device, wherein the control device includes a processing unit, a first memory space, a second memory space, a setting memory space, and a third memory space, and is configured as follows. Namely, while the software package is stored in the first memory space as a readable memory space for the processing unit of the control device to read out the software package, first read information indicating that the software package is readable from the first memory space is set in the setting memory space and the second memory space is set as a non-readable memory space not related to reading of the software package by the processing unit. When an updating software package is written in the third memory space, the updating software package stored in the third memory space is stored in the second memory space. Further, second read information indicating that the software package is readable from the second memory space is set in the setting memory space, and the second memory space is set as the readable memory space while the first memory space is set as the non-readable memory space. While the software package is stored in the second memory space as the readable memory space, the second read information is set in the setting memory space and the first memory space is set as the non-readable memory space. When the updating software package is written in the third memory space, the updating software package stored in the third memory space is stored in the first memory space. Further, the first read information is set in the setting memory space, and the first memory space is set as the readable memory space while the second memory space is set as the non-readable memory space. The terminal device includes a computer, and the program causes the computer to execute steps including a writing control step of writing the updating software package in the third memory space.

### (2-1) A terminal device of second aspect

A terminal device related to a second aspect of the present invention is A terminal device for use in a software rewriting system configured to rewrite a software package of a control device, wherein the control device includes a processing unit, a first memory space, a second memory space, and a setting memory space, and is configured as follows. Namely, while the software package is stored in the first memory space as a readable memory space for the processing unit of the control device to read out the software package, first read information indicating that the software package is readable from the first memory space is set in the setting memory space and the second memory space is set as a non-readable memory space not related to reading of the software package by the processing unit. When an updating software package is written in the second memory space, second read information indicating that the software package is readable from the second memory space is set in the setting memory space, and the second memory space is set as the readable memory space while the first memory space is set as the non-readable memory space. While the software package is stored in the second memory space as the readable memory space, the second read information is set in the setting memory space and the first memory space is set as the non-readable memory space. When the updating software package is written in the first memory space, the first read information is set in the setting memory space, and the first memory space is set as the readable memory space while the second memory space is set as the non-readable memory space. The terminal device retrieves a setting value set in the setting memory space, and based on the setting value retrieved, writes the updating software package in a memory space, out of the first memory space and the second memory space, set as the non-readable memory space.

### (2-2) Software rewriting program of second aspect

A software rewriting program of the second aspect related to the present invention is A software rewriting program of a terminal device for use in a software rewriting system configured to rewrite a software package of a control device, wherein the control device includes a processing unit, a first memory space, a second memory space, and a setting memory space, and is configured as follows. Namely, while the software package is stored in the first memory space as a readable memory space for the processing unit of the control device to read out the software package, first read information indicating that the software package is readable from the first memory space is set in the setting memory space and the second memory space is set as a non-readable memory space not related to reading of the software package by the processing unit. When an updating software package is written in the second memory space, second read information indicating that the software package is readable from the second memory space is set in the setting memory space, and the second memory space is set as the readable memory space while the first memory space is set as the non-readable memory space. While the software package is stored in the second memory space as the readable memory space, the second read information is set in the setting memory space and the first memory space is set as the non-readable memory space. When the updating software package is written in the first memory space, the first read information is set in the setting memory space, and the first memory space is set as the readable memory space while the second memory space is set as the non-readable memory space. The terminal device includes a computer, and the program causes the computer to execute steps including: a retrieval control step of retrieving information set in the setting memory space; and a writing control step of, based on the information retrieved in the retrieval control step, writing the updating software package in a memory space, out of the first memory space and the second memory space, set as the non-readable memory space.

The terminal device of each of the first aspect and the second aspect related to the present invention may be such that the updating software package is written in while the control device is in an active state. The software rewriting program of each of the first aspect and the second aspect related to the present invention may be such that, in the writing control step, the updating software package is written in while the control device is in an active state.

The terminal device of each of the first aspect and the second aspect, and the software rewriting program of each of the first aspect and the second aspect related to the present invention may be such that the control device checks if there is any problem in the updating software package, after setting to the setting memory space at a time of writing in the updating software package. If there is a problem in the updating software package, if the first read information is set to the setting memory space, the setting in the setting memory space may be changed from the first read information to the second read information to set the second memory space as the readable memory space and set the first memory space as the non-readable memory space. If the second read information is set to the setting memory space, the setting in the setting memory space may be changed from the second read information to the first read information to set the first memory space as the readable memory space and set the second memory space as the non-readable memory space. Further, rewriting-failed information indicating a failure in rewriting of the software package may be transmitted to the terminal device. Further, the terminal device of each of the first aspect and the second aspect related to the present invention may be configured to receive the rewriting-failed information from the control device. The software rewriting program of each of the first aspect and the second aspect related to the present invention may be configured to cause the computer to execute the steps further including a reception control step of receiving the rewriting-failed information from the control device.

The terminal device of the first aspect and the second aspect related to the present invention may be such that the control device performs the setting to the setting memory space at a time of writing in the updating software package when a turn-off operation of turning off a power source of the control device is conducted. The terminal device may be configured to maintain the power source of the control device in the ON-state even when the turn-off operation is conducted, until the setting to the setting memory space by the control device is completed, and turn off the power source of the control device when the setting to the setting memory space by the control device is completed. The software rewriting program of each of the first aspect and the second aspect related to the present invention may cause the computer to execute the steps further including the power source control step of having the control device perform the setting to the setting memory space at a time of writing in the updating software package when a turn-off operation of turning off a power source of the control device is conducted, and having the terminal device maintain the power source of the control device in the ON-state even when the turn-off operation is conducted, until the setting to the setting memory space by the control device is completed, and turn off the power source of the control device when the setting to the setting memory space by the control device is completed.

The terminal device of each of the first aspect and the second aspect of the present invention, and the software rewriting program of each of the first aspect and the second aspect related to the present invention may be such that the control device is mounted in a movable object.

The terminal device of the first aspect and the second aspect related to the present invention may be such that the terminal device is provided in the movable object, and includes a short-range wireless communication unit configured to perform communication with at least one other movable object different from the movable object, via a short-range wireless communication network. The updating software package may be transmitted to the control device of the own movable object and/or transmitted to the at least one other movable object via the short-range wireless communication unit and the short-range wireless communication network. The software rewriting program of each of the first aspect and the second aspect related to the present invention may be such that the terminal device is provided in the movable object, and includes a short-range wireless communication unit configured to perform communication with at least one other movable object different from the movable object, via a short-range wireless communication network. The program may cause the computer to execute the steps further including a transmission control step of transmitting the updating software package to the control device and/or to the at least one other movable object via the short-range wireless communication unit and the short-range wireless communication network.

The terminal device of the first aspect and the second aspect related to the present invention may be such that: the control device is mounted in an electric device; the terminal device functions as a multi-function portable communication terminal device, and includes a short-range wireless communication unit configured to perform communication with the electric device via the short-range wireless communication unit and the short-range wireless communication network; and the updating software package is transmitted to the electric device via the short-range wireless communication unit and the short-range wireless communication network. The software rewriting program of each of the first aspect and the second aspect related to the present invention may be such that the control device is mounted in an electric device; the terminal device functions as a multi-function portable communication terminal device, and includes a short-range wireless communication unit configured to perform communication with the electric device via the short-range wireless communication unit and the short-range wireless communication network; and the program causes the computer to execute the steps further including a transmission control step of transmitting the updating software package to the electric device via the short-range wireless communication unit and the short-range wireless communication network.

### Advantageous Effects of Invention

The above aspects of the present invention can eliminate the need for having a user intentionally make an operation of rewriting the software package every time the software package is to be rewritten, thereby enabling an improvement in the convenience at a time of rewriting the software package of the control device.

### Brief Description of Drawings

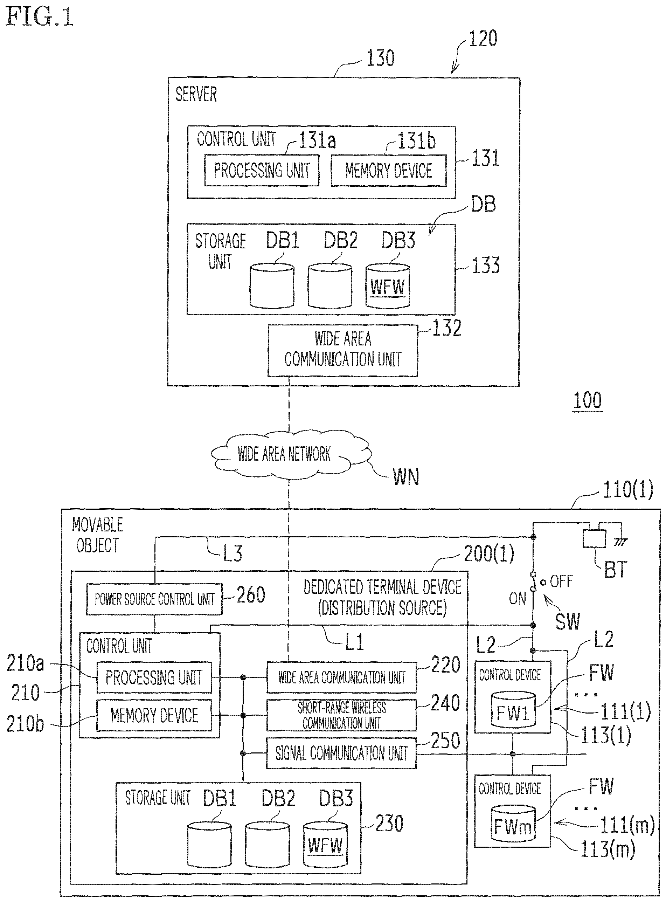

FIG. 1 is a structural diagram schematically showing an exemplary software rewriting system related to a first embodiment, and provides a schematic view of a state where a dedicated terminal device provided to a movable object out of a plurality of movable objects which could serve as a distribution source is communicating with a server via a wide area network.

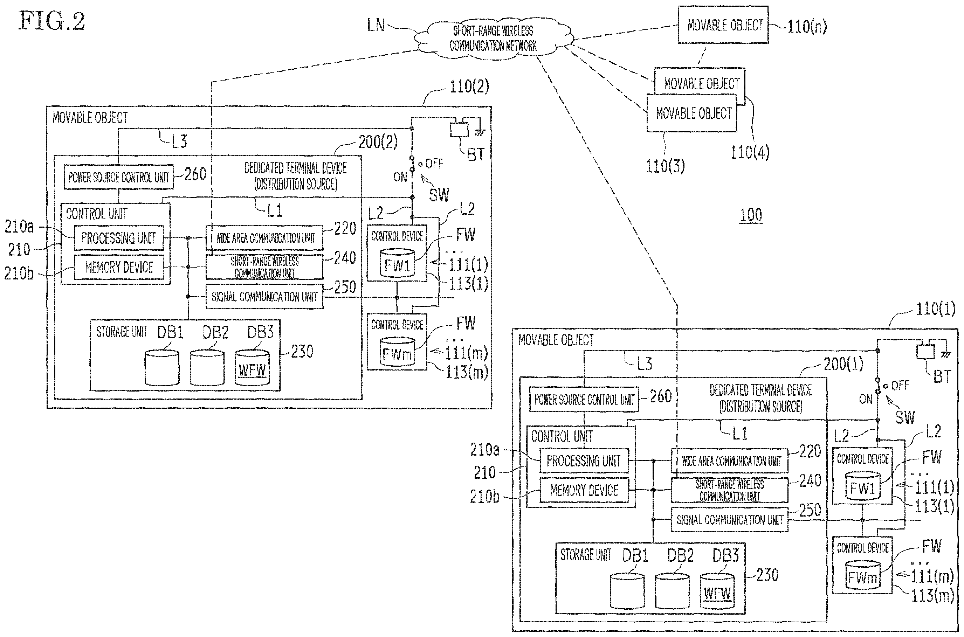

FIG. 2 is a schematic view showing a state where the dedicated terminal device having communicated with the server is communicating, via the short-range wireless communication network, with another dedicated terminal device that could serve as a distribution source, in the software rewriting system shown in FIG. 1.

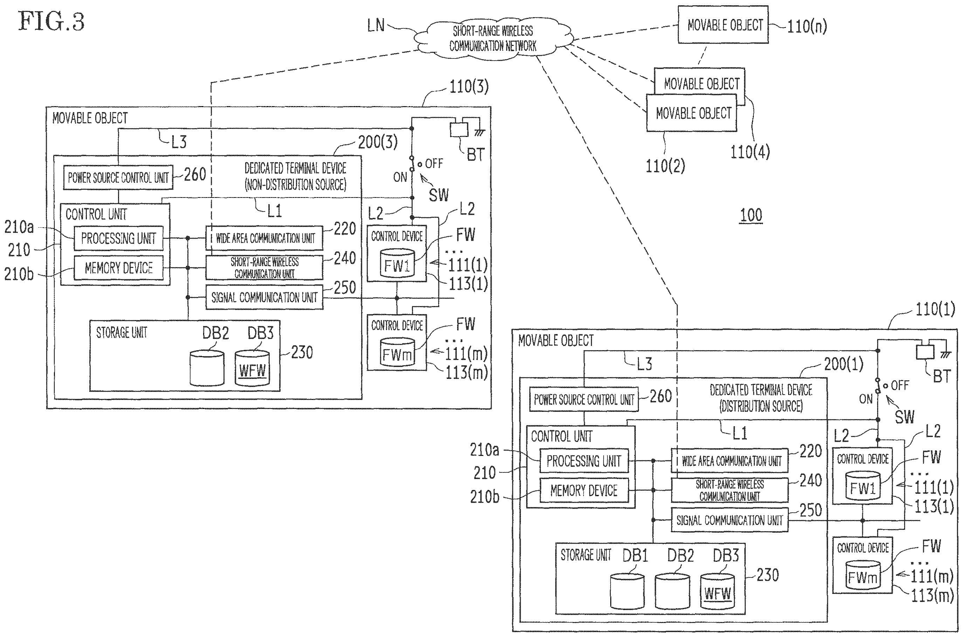

FIG. 3 is a schematic view showing a state where the dedicated terminal device having communicated with the server is communicating, via the short-range wireless communication network, with another dedicated terminal device that does not substantially serve as a distribution source, in the software rewriting system shown in FIG. 1.

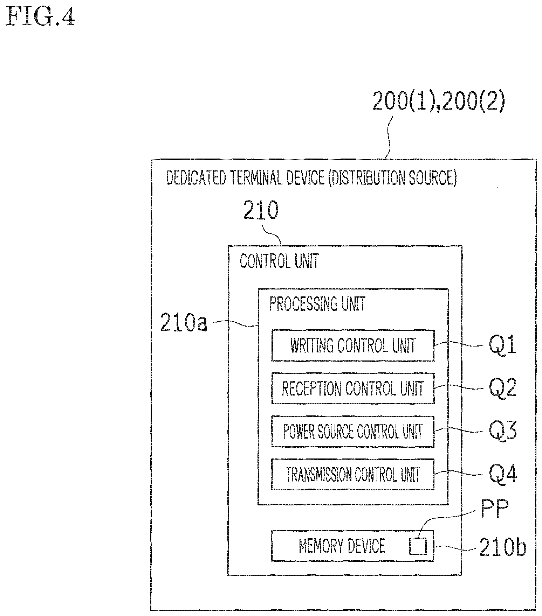

FIG. 4 is a block diagram showing an exemplary software configuration of the dedicated terminal device (distribution source) shown in FIG. 1 to FIG. 3, in relation to the first embodiment-1.

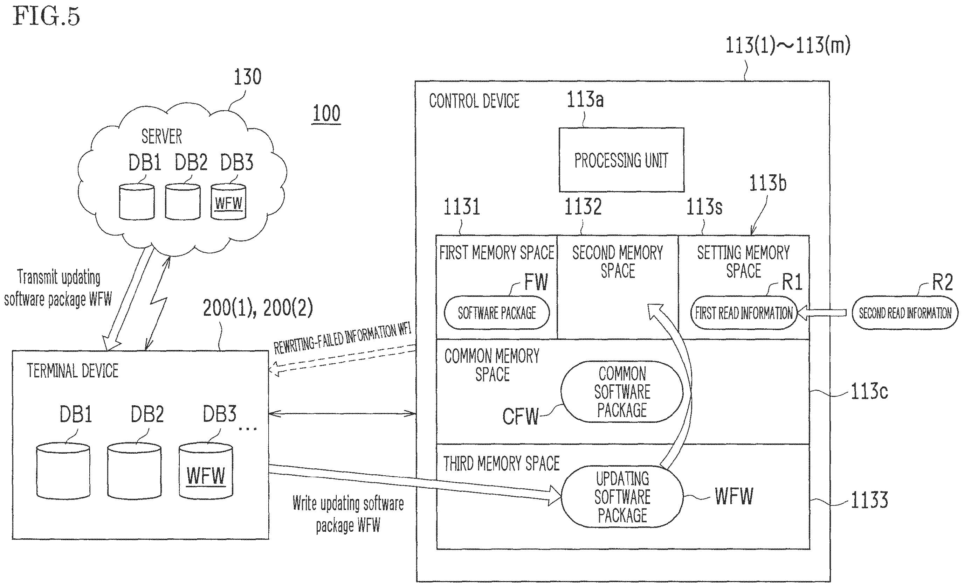

FIG. 5 is a schematic view for explaining an exemplary writing operation of writing an updating software package with respect to the control device in the software configuration shown in FIG. 4, and shows an example where a readable memory space for the software package is switched from a first memory space to a second memory space to rewrite the software package by the processing unit.

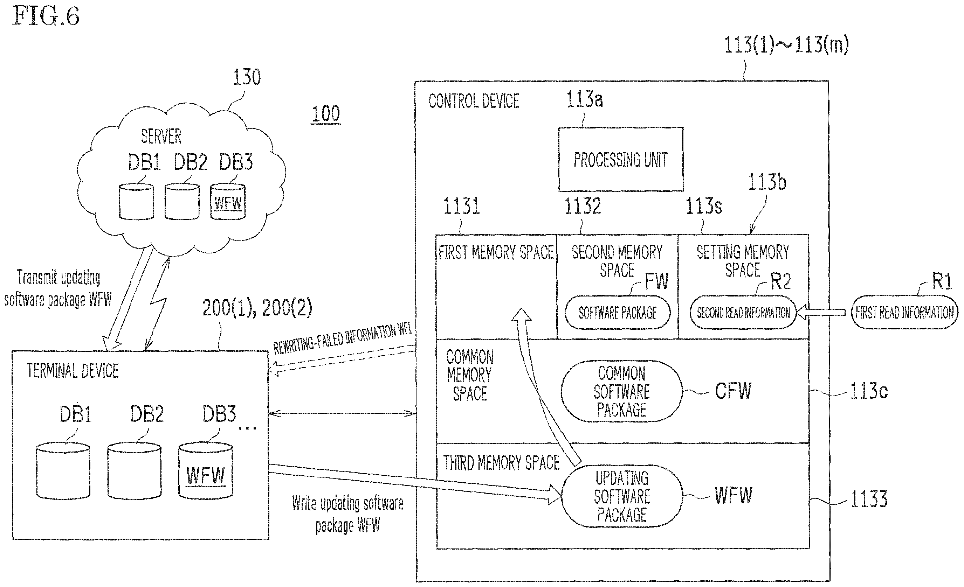

FIG. 6 is a schematic view for explaining an exemplary writing operation of writing an updating software package with respect to the control device in the software configuration shown in FIG. 4, and shows an example where a readable memory space for the software package is switched from the second memory space to the first memory space to rewrite the software package by the processing unit.

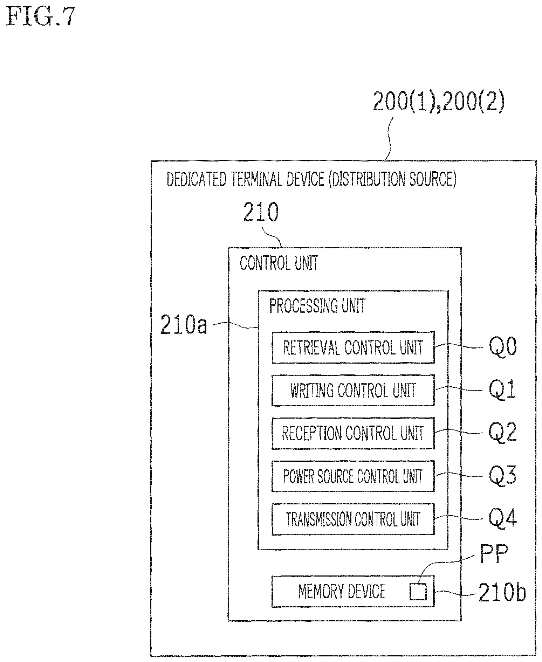

FIG. 7 is a block diagram showing an exemplary software configuration of the dedicated terminal device (distribution source) shown in FIG. 1 to FIG. 3, in relation to the first embodiment-2.

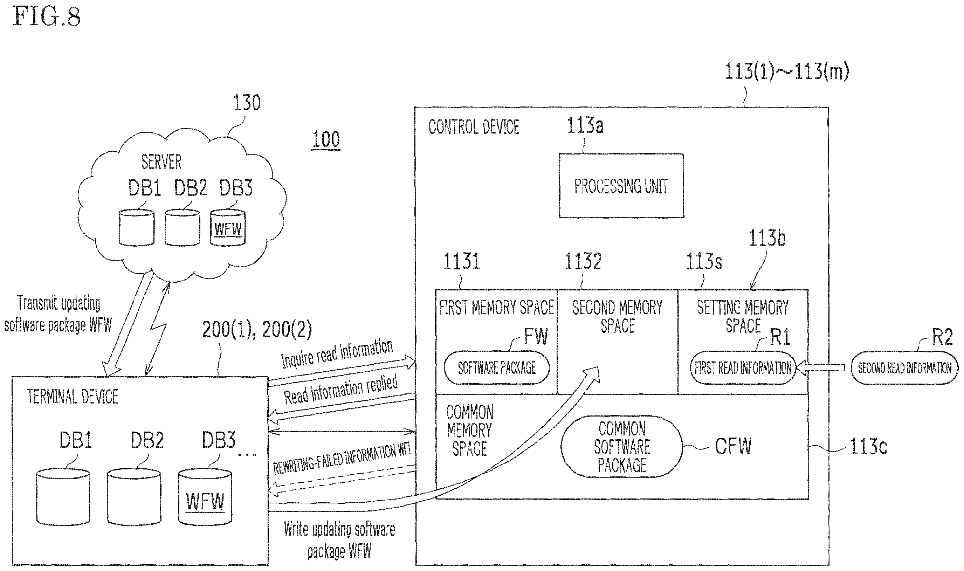

FIG. 8 is a schematic view for explaining an exemplary writing operation of writing an updating software package with respect to the control device in the software configuration shown in FIG. 7, and shows another example where a readable memory space for the software package is switched from the first memory space to the second memory space to rewrite the software package by the processing unit.

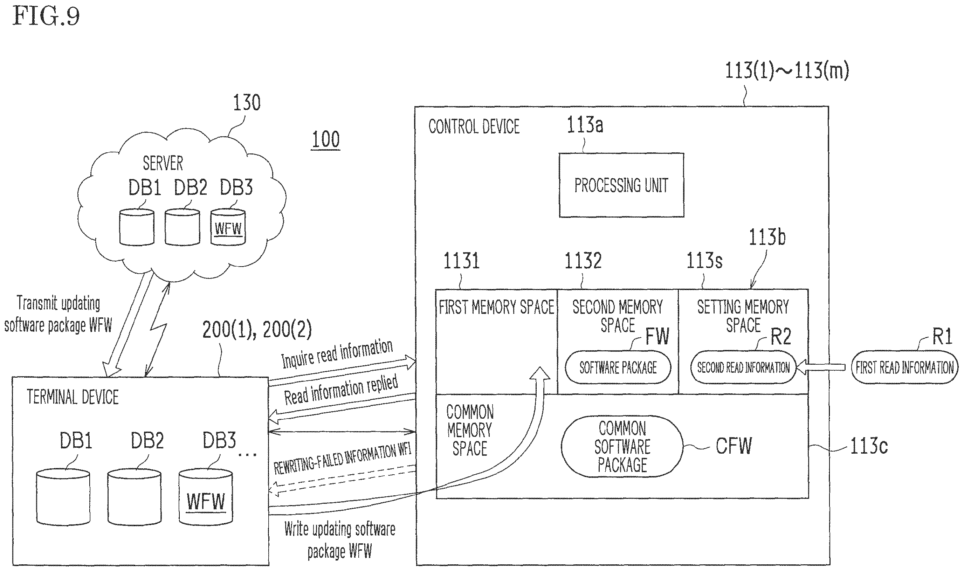

FIG. 9 is a schematic view for explaining an exemplary writing operation of writing an updating software package with respect to the control device in the software configuration shown in FIG. 7, and shows another example where a readable memory space for the software package is switched from the second memory space to the first memory space to rewrite the software package by the processing unit.

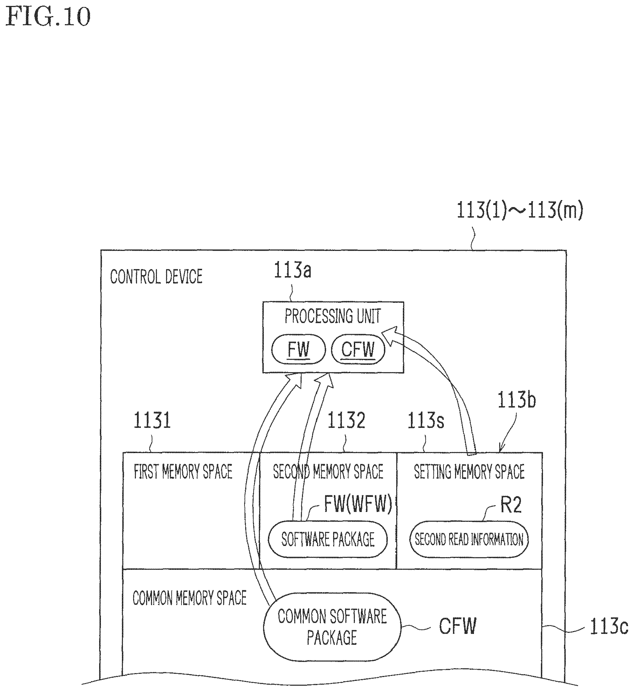

FIG. 10 is a schematic view for explaining a reading state of a software package (updating software package) when the control device is activated next time, in the software configuration related to the first embodiment-1 and the first embodiment-2, and shows a state of the processing unit reading the software package from the second memory space.

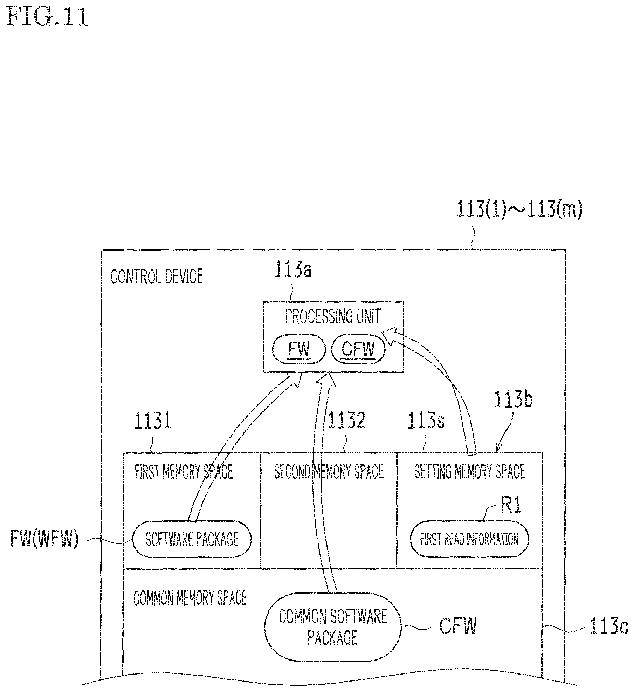

FIG. 11 is a schematic view for explaining a reading state of a software package (updating software package) when the control device is activated next time, in the software configuration related to the first embodiment-1 and the first embodiment-2, and shows a state of the processing unit reading the software package from the first memory space.

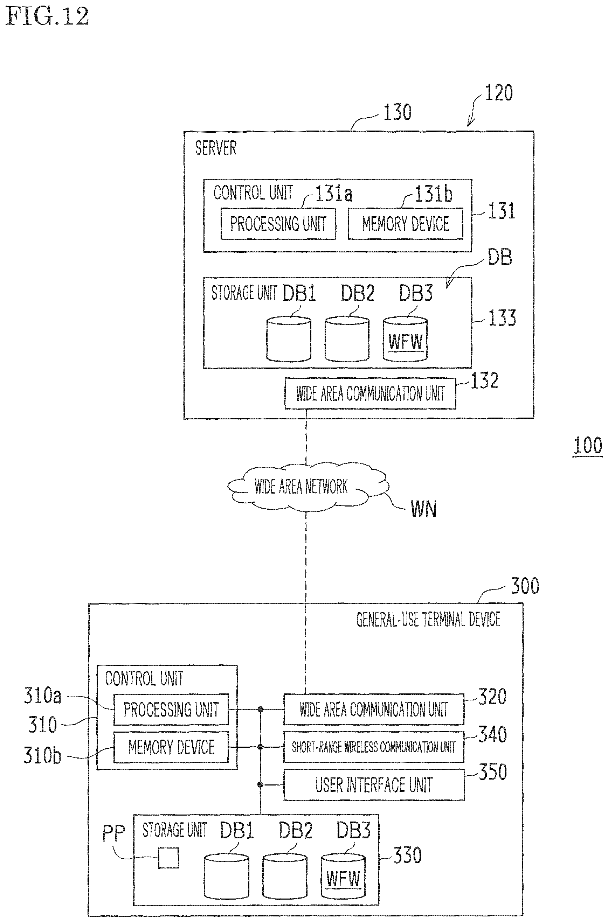

FIG. 12 is a structural diagram schematically showing an example software rewriting system related to a second embodiment, and provides a schematic view of a state where a general-use terminal device is communicating with a server via a wide area network.

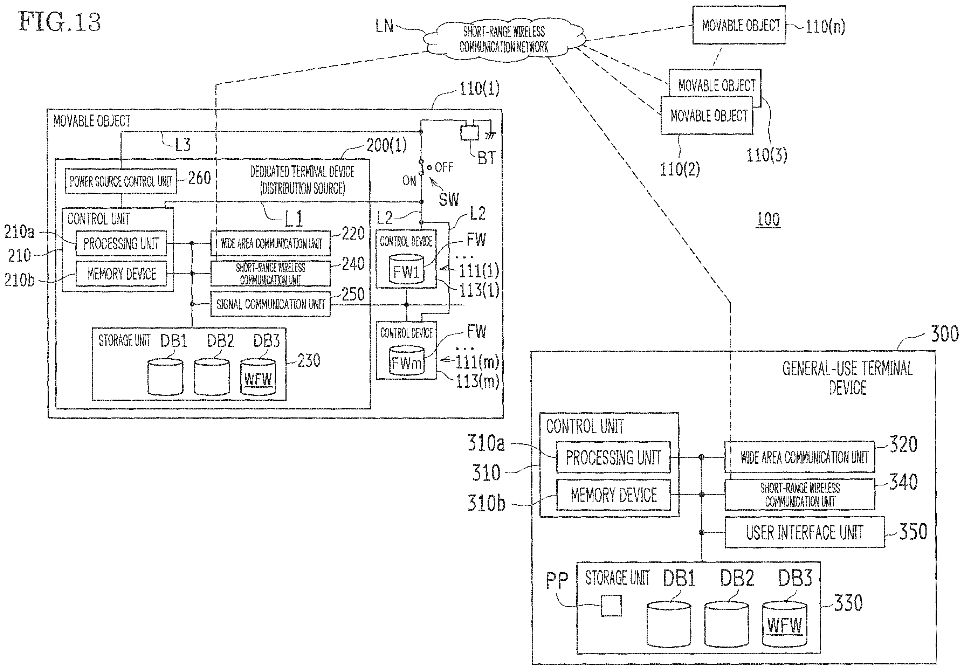

FIG. 13 is a schematic view showing a state where the general-use terminal device having communicated with the server is communicating, via a short-range wireless communication network, with a dedicated terminal device that could serve as a distribution source, in the software rewriting system shown in FIG. 12.

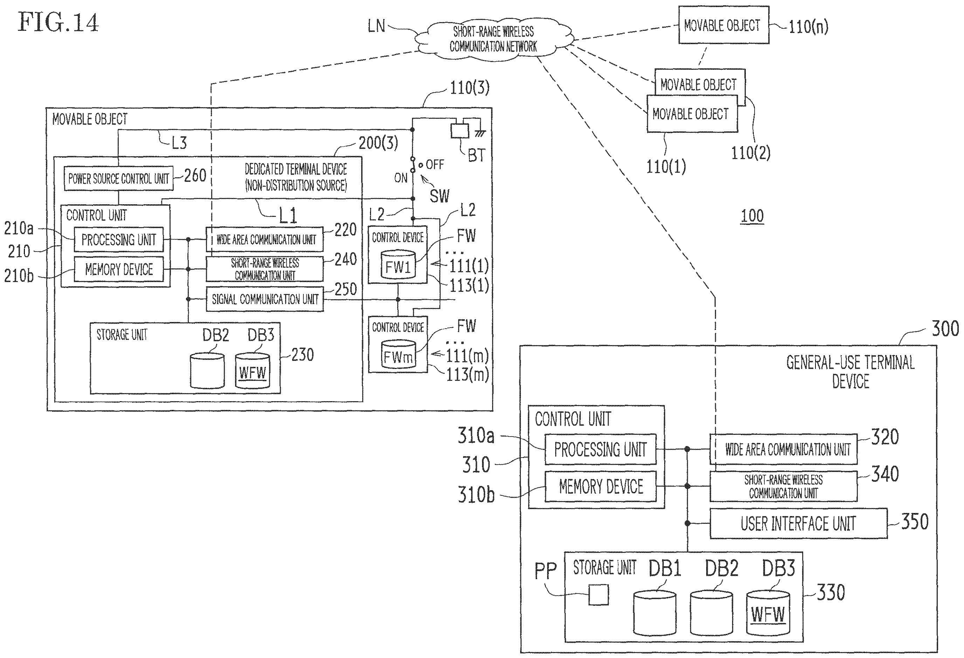

FIG. 14 is a schematic view showing a state where the general-use terminal device having communicated with the server is communicating, via a short-range wireless communication network, with a dedicated terminal device that does not substantially serve as a distribution source, in the software rewriting system shown in FIG. 12.

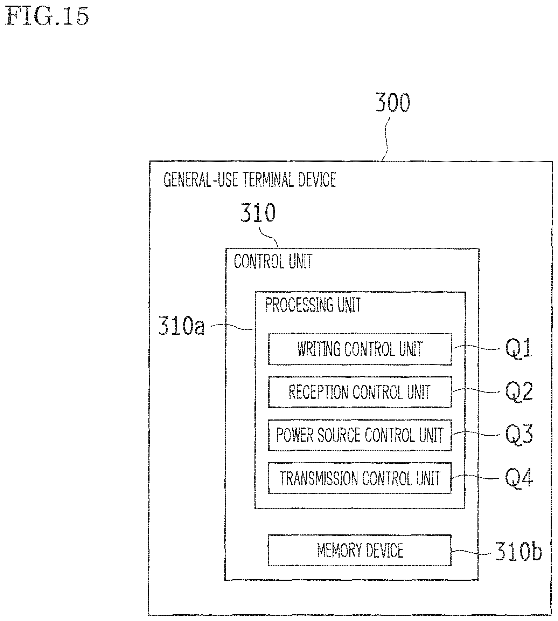

FIG. 15 is a block diagram showing an exemplary software configuration of the general-use terminal device shown in FIG. 12 to FIG. 14, in relation to a second embodiment-1.

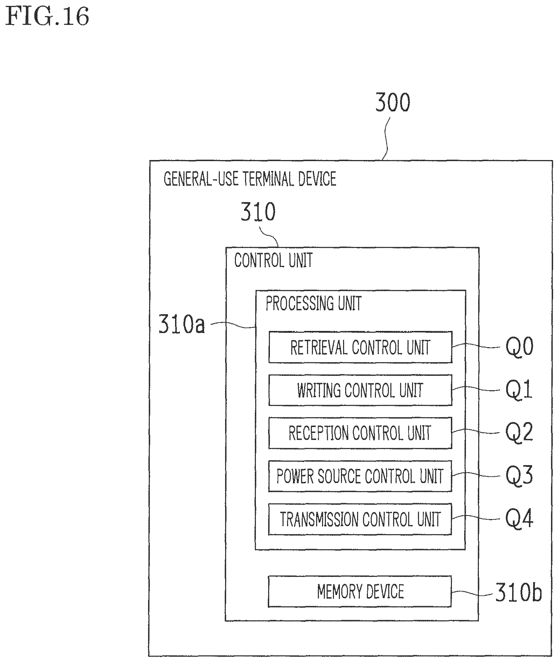

FIG. 16 is a block diagram showing an exemplary software configuration of the general-use terminal device shown in FIG. 12 to FIG. 14, in relation to the second embodiment-2.

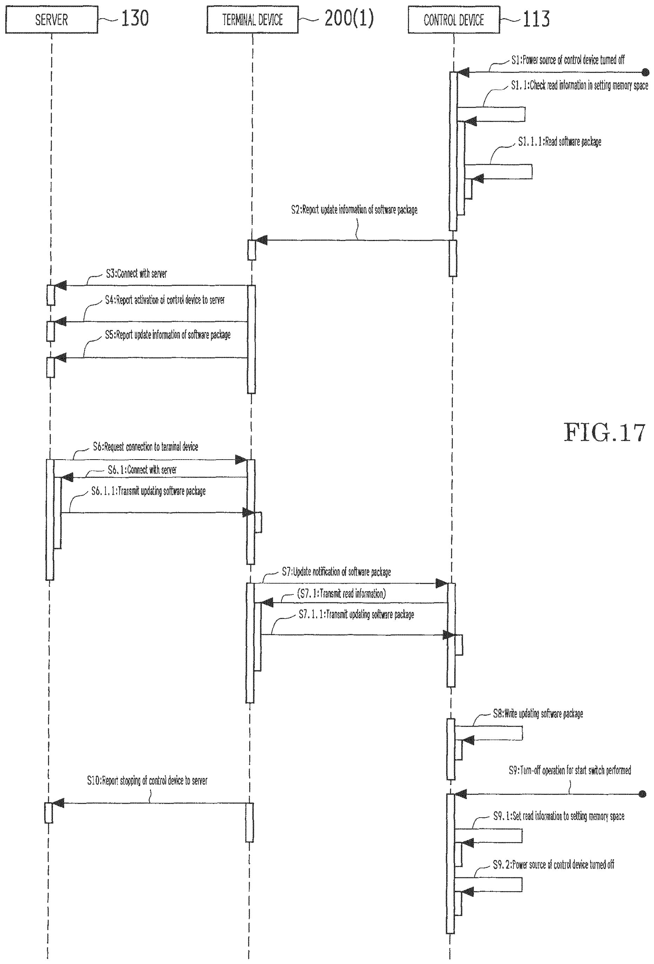

FIG. 17 is a flowchart showing an exemplary software rewriting process taking place in the software rewriting system of the first embodiment shown in FIG. 1 to FIG. 11, and shows a first half of the exemplary process.

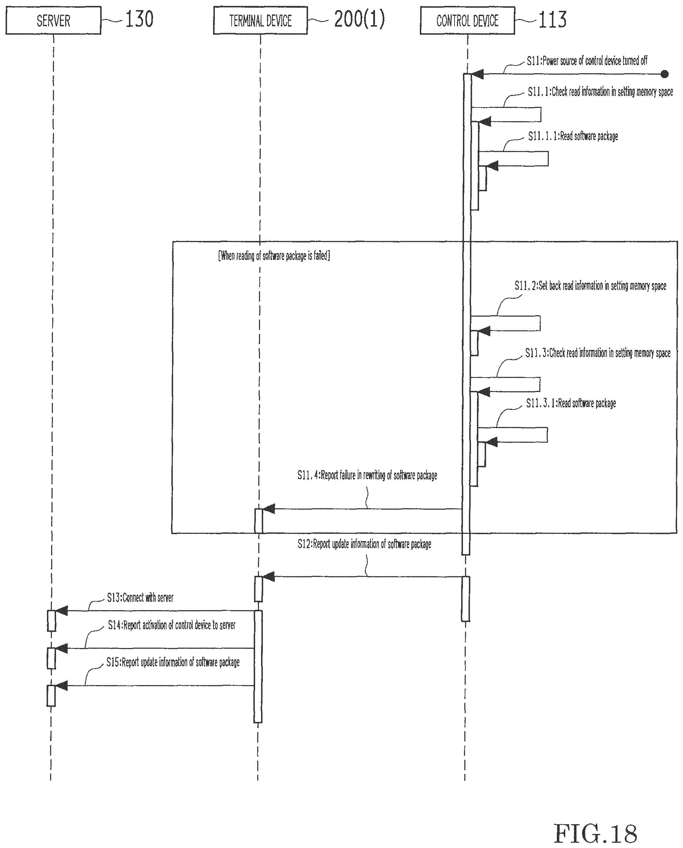

FIG. 18 is a flowchart showing an exemplary software rewriting process taking place in the software rewriting system of the first embodiment shown in FIG. 1 to FIG. 11, and shows a last half of the exemplary process.

### Description of Embodiments

The following describes embodiments related to the present invention with reference to attached drawings. The following description deals with examples where the movable object, which is an example of the electric device, is an agricultural work machine such as a combine harvester, a tiller, a rice transplanter, and the like.

### [First Embodiment]

FIG. 1 to FIG. 3 are structural view schematically showing an exemplary software rewriting system 100 related to a first embodiment.

FIG. 1 is a schematic view showing a state where a dedicated terminal device 200(1) provided to a movable object 110(1) that could serve as a distribution source, out of a plurality of movable objects 110(1) to 110(n) (where n is an integer of 2 or more), is communicating with a server 130 via a wide area network WN. FIG. 2 is a schematic view showing a state where the dedicated terminal device 200(1) having communicated with the server 130 is communicating, via a short-range wireless communication network LN, with another dedicated terminal device 200(2) that could serve as a distribution source, in the software rewriting system 100 shown in FIG. 1. FIG. 3 is a schematic view showing a state where the dedicated terminal device 200(1) having communicated with the server 130 is communicating, via the short-range wireless communication network LN, with another dedicated terminal device 200(3) that does not substantially serve as a distribution source, in the software rewriting system 100 shown in FIG. 1.

The software rewriting system 100 shown in FIG. 1 to FIG. 3 is a system for rewriting software packages FW (FW1 to FWm) of control devices 113(1) to 113(m) (where m is an integer of 1 or 2 or more) mounted in a plurality of movable objects 110(1) to 110(n) (e.g., movable work machines, ships) (see FIG. 1 to FIG. 3). In this example, the control devices 113(1) to 113(m) are electronic control units (Electronic Control Units: ECUs), and are mounted in the movable objects 110(1) to 110(n). The software package FW is firmware.

The software rewriting system 100 includes: the plurality of movable objects 110(1) to 110(n), the dedicated terminal devices 200(1) to 200(n) provided to the plurality of movable objects 110(1) to 110(n), and the server 130 (see FIG. 1) connected to the dedicated terminal devices 200(1) to 200(n) via a wide area network WN (see FIG. 1).

In this example, the server 130 is a large information device (specifically stationary computer installed in a predetermined location). However, the server 130 is not limited to this, and may be information devices capable of storing the updating software database DB, e.g., a small information device having a storage unit with a sufficient capacity for the data size needed for the updating software database DB, more specifically, exclusive terminal devices 200(1), 200(2) provided to the movable objects 110(1), 110(2), portable general-use terminal device 300.

The terminal devices 200(1) to (n) include at least one terminal device that could serve as a distribution source for other terminal devices. The terminal devices 200(1) to (n) may include a terminal device that does not substantially serve as a distribution source for the other terminal devices.

It should be noted that the above expression reading "terminal device that does not substantially serve as a distribution source for the other terminal devices" means that the terminal device is capable of serving as a distribution source, provided that the distribution destination is a movable object of the same model; however is not able to serve as a distribution source if the distribution destination is of a different model; i.e., a terminal device that does not have pieces of model information MI except for its own (except the destination model(s)) and does not have updating software packages WFW (e.g., the latest version, more particularly, the latest version of the software packages FW) associated with the pieces of model information MI of the other models.

In the following descriptions, terminal devices 200(1) and 200(2) (distribution sources) are each a terminal device that could serve as a distribution source for the other terminal devices, whereas terminal devices 200(3) to 200(n) (non-distribution sources) are each a terminal device that does not substantially serve as a distribution source for the other terminal devices.

The terminal device 200(1) (distribution source) is capable of serving as a destination of updating software packages WFW distributed from the server 130, for updating the software package FW of the control device [113(1) to 113(m)], and as a distribution source for other terminal devices 200(2) to 200(n). Similarly, the terminal device 200(2) (distribution source) is capable of serving as a destination of updating software packages WFW distributed from the server 130 and as a distribution source for other terminal devices 200(1) and 200(3) to 200(n).

More Specifically, the terminal devices 200(1) and 200(2) (distribution sources) are each configured to receive, via a wide area network WN and the wide area communication unit 220, updating software packages WFW in the updating software database DB of the server 130.

The terminal device 200(1) (distribution source) stores in the storage unit 230 thereof updating software packages WFW received from the server 130, and transmits an updating software package WFW stored in the storage unit 230, via its short-range wireless communication unit 240 and a short-range wireless communication network LN, to another terminal device, out of the other terminal devices 200(2) to 200(n), which can be communicated within a range of a short-range wireless communication.

Similarly, the terminal device 200(2) (distribution source) stores in the storage unit 230 thereof updating software packages WFW received from the server 130, and transmits an updating software package WFW stored in the storage unit 230, via its short-range wireless communication unit 240 and a short-range wireless communication network LN, to another terminal device, out of the other terminal devices 200(1) and 200(3) to 200(n), which can be communicated within a short-range wireless communication range.

Further, more specifically, the terminal device 200(1) (distribution source) randomly establishes communication with other terminal devices, out of the other terminal devices 200(2) to 200(n), which can be communicated via the short-range wireless communication unit 240 and the short-range wireless communication network LN within a short-range wireless communication range. The terminal device 200(1) then authenticates the other terminal devices out of the terminal devices 200(2) to 200(n) having established communication, and transmits an updating software package WFW stored in the storage unit 230 of the terminal device 200(1) to a terminal device 200(i) on the other end (where i is an integer ranging from 1 to n, corresponding to suffix of the terminal device on the other end), out of the terminal devices 200(2) to 200(n), which corresponds to a piece of model information MI stored in the storage unit 230 of the terminal device 200(1) (distribution source).

Similarly, the terminal device 200(2) (distribution source) randomly establishes communication with other terminal devices, out of the other terminal devices 200(1) and 200(3) to 200(n), which can be communicated via the short-range wireless communication unit 240 and the short-range wireless communication network LN within a short-range wireless communication range. The terminal device 200(2) then transmits an updating software package WFW stored in the storage unit 230 of the terminal device 200(2) (distribution source) to a terminal device 200(i) on the other end, out of the terminal devices 200(1) and 200(3) to 200(n), which corresponds to a piece of model information MI stored in the storage unit 230 of the terminal device 200(2) (distribution source).

As shown in FIG. 1 to FIG. 3, the server 130 (see FIG. 1) in this example is arranged in a remote monitoring center 120 (see FIG. 1) in a position far apart from the movable objects 110(1) to 110(n) in this example, and is configured to store information related to software packages FW of the control devices 113(1) to 113(m) mounted on the movable objects 110(1) to 110(n).

More specifically, the terminal devices 200(1) to 200(n) and the server 130 have wide area communication units 220 and 132 (specifically, wide area communication interfaces), and are connected with one another by their respective wide area communication units 220 and 132 via a wide area network WN (see FIG. 1), thereby enabling transmission/reception of information amongst the terminal devices 200(1) to 200(n) and the server 130. This way, the server 130 allows the users to remotely monitor the movable objects 110(1) to 110(n) through the remote monitoring center 120. The terminal devices 200(1) to 200(n) in this example are each a remote monitoring terminal device. It should be noted that, depending on the situation, the wide area communication unit 220 does not have to be provided in the terminal devices 200(3) to 200(n).

Further, the server 130 can transmit, to the terminal device [200(1), 200(2)] (distribution source) of the movable object [110(1), 110(2)], information regarding the software packages FW of the control devices 113(1) to 113(m) in the movable objects 110(1) to 110(n). On the other hand, the terminal device [200(1), 200(2)] (distribution source) in the movable object [110(1), 110(2)] can receive, from the server 130, information regarding the software packages FW of the control devices 113(1) to 113(m) in the movable objects 110(1) to 110(n).

It should be noted that the wide area network WN may be a wired communication network, a wireless communication network (wireless communication network in compliance with a so-called mobile communication standard), or a combination of a wired communication network and a wireless communication network. Typically, the wide area network WN is a public line network provided by a telecommunications carrier; e.g., a public line network that allows terminals such as landline telephones and mobile phones to communicate with one another.

The movable objects 110(1) to 110(n) each includes one or a plurality of work units (a plurality of work units in this example) [111(1) to 111(m)] to [111(1) to 111(m)] (see FIG. 1 to FIG. 3); and terminal devices 200(1) to 200(n). For example, where the agricultural work machine is a combine harvester, examples of the work units 111(1) to 111(m) are a traveling work unit, a reaping work unit, a threshing work unit, and the like.

The work units 111(1) to 111(m) are provided with the control devices 113(1) to 113(m), respectively. Each of the control devices 113(1) to 113(m) instructs various actuators (not shown) to suitably control the operational states of the corresponding work unit [111(1) to 111(m)]. The control devices 113(1) to 113(m) are each configured to transfer data to one another based on a communication standard such as a CAN (Controller Area Network) standard or the like.

More specifically, the control devices 113(1) to 113(m) control the operational states of the work units 111(1) to 111(m), based on information (signal) of detection values from various sensors of the work units 111(1) to 111(m) and ON/OFF information of various switches. Further, the control devices 113(1) to 113(m) each determines as needed whether or not an abnormality such as breaking down of the movable object 110 is taking place, and if an abnormality is taking place, generates error information (specifically, an error code) corresponding to that abnormality.

A work unit 111, out of the work units 111(1) to 111(m), which operates an engine (not shown) includes: an engine; a control device 113 configured to monitor the rotational speed and the load condition of the engine and control the entire engine by instructing a suitable injection pressure and an injection timing to the combustion system; an electric power generator (not shown); and a start switch SW, and a battery BT is mounted thereto. Further, the control device 113 configured to control the entire engine controls operation start/stop, and operational states of driving by the engine, in addition to control of the work unit 111 that operates the engine.

It should be noted that, during an operating state of the engine by the work unit 111 operating the engine, the battery BT is suitably charged by electric power supplied from the electric power generator.

The start switch SW is a switch for selectively switching a power-on state and a power-off state. It should be noted that the power-on state is a state in which electric power is supplied from the battery BT to a control unit 210 and the control device [113(1) to 113(m)]. The power-off state is a state in which supply of electric power from the battery BT to a control unit 210 and the control device [113(1) to 113(m)] is shut-off.

More specifically, the battery BT is connected, via the start switch SW, to both a power source connection line L1 connected to the control unit 210 and a power source connection line L2 connected to the control device [113(1) to 113(m)].

In this example, the start switch is a switch so called key switch, and an on-terminal thereof is a connection terminal of the power source connection lines L1 and L2. An off-terminal is a terminal while the start switch SW is in the off state.

It should be noted that the battery BT and a power source control unit 260 are connected via a power source connection line L3, irrespective of the ON/OFF state of the start switch SW.

Here, a turn-off operation for switching the start switch SW to an OFF-state includes a turn-off operation for powering off the control device [113(1) to 113(m)]. The power source control unit 260 does not turn off the power source of the control unit 210 and maintains it in an ON-state of the control unit 210, even if the turn-off operation of the start switch SW is conducted. The power source of the control unit 210 is turned off in response to an instruction signal from the control unit 210.

### [Server]

As shown in FIG. 1, the server 130 includes a control unit 131, a wide area communication unit 132, and the storage unit 133.

### (Control Unit)

The control unit 131 includes: a processing unit 131a constituted by a so-called computer such as a CPU (Central Processing Unit); and a memory unit 131b including a volatile memory such as a ROM (Random Only Memory), a RAM (Random Access Memory).

The control unit 131 is configured to perform operation control of various structuring elements by having the processing unit 131a load a control program stored in advance in the ROM of the memory unit 131b into the RAM of the memory unit 131b, and running the program.

In the present embodiment, the control unit 131 controls transmission/reception of data during communications, various inputs and outputs, and arithmetic processing.

### (Wide Area Communication Unit)

The wide area communication unit 132 is electrically connected to a data line of the control unit 131. With instructions from the control unit 131, the wide area communication unit 132 is able to perform communication using the same communication protocol as the wide area communication units 220 (see FIG. 1 to FIG. 3) of the terminal devices 200(1) to 200(n) of the movable objects 110(1) to 110(n). Data transmitted/received during communication is converted by the wide area communication unit 132 so as to comply with the communication protocol. The wide area communication unit 132 transmits information in the storage unit 133, which is related to the software packages FW of the control devices 113(1) to 113(m) in the movable objects 110(1) to 110(n), to the terminal devices 200(1) to 200(n) [terminal devices 200(1) and 200(2) in this example] in the movable objects 110(1) to 110(n) [movable objects 110(1) and 110(2) in this example].

### (Storage Unit)

The storage unit 133 is electrically connected to a data line of the control unit 131. With instructions from the control unit 131, the storage unit 133 controls writing and reading of information. The storage unit 133, in this example, is a large-capacity storage unit such as a flush memory, or a hard disk device.

In the storage unit 133, the updating software database DB is stored.

When the type of the movable objects 110(i) on the other end (e.g., movable work machines, ships) are different, it goes without saying that the software packages FW of the control devices 113(1) to 113(m) mounted on the movable objects 110(i) on the other end may be different. Even if the movable objects 110(i) on the other end are the same type, the software packages FW of the control devices 113(1) to 113(m) mounted to the movable objects 110(i) of different models may be different. If the updating software packages WFW stored in the storage unit 230 are not for the software packages FW of the control devices 113(1) to 113(m) mounted to the movable objects 110(i) on the other end, the software packages FW of the control devices 113(1) to 113(m) of the movable objects 110(i) on the other end cannot be rewritten.

In view of the above, the updating software database DB stores updating software packages WFW in association with pieces of model information MI of the movable objects 110(1) to 110(n). Further, the updating software database DB stores pieces of update information RI of the updating software packages WFW.

In the present embodiment, the updating software database DB includes: the model information management database DB1; the updating software management database DB2; and the updating software storing database DB3. The updating software storing database DB3 stores updating software packages WFW.

When a new model is developed, an updating software package WFW is registered at any time in the updating software storing database DB3. When a new version of the software package FW is developed, the updating software package WFW is updated at any time in the updating software storing database DB3.

Further, in the storage units 230 of the terminal devices 200(1) to 200(n) in the movable objects 110(1) to 110(n), pieces of model information MI and pieces of update information RI such as the versions VR, the date and time of update, and the like of the software packages FW of the control devices 113(1) to 113(m) are registered.

### [Dedicated Terminal Device (Distribution Source)]

Next, a system configuration of the dedicated terminal device [200(1), 200(2)] (distribution source) is described with reference to FIG. 1 to FIG. 3.

### - Hardware Configuration of Dedicated Terminal Device (Distribution Source) -

As shown in FIG. 1 to FIG. 3, the terminal devices 200(1) and 200(2) (distribution sources) each includes a control unit 210 (an example of computer), a wide area communication unit 220, a storage unit 230, a short-range wireless communication unit 240, a signal communication unit 250, and a power source control unit 260.

### (Control Unit)

The control unit 210 includes: a processing unit 210a constituted by a so-called computer such as a CPU (Central Processing Unit); and a memory unit 210b including a volatile memory such as a ROM (Random Only Memory), a RAM (Random Access Memory).

The control unit 210 is configured to achieve various functions necessary for the control unit 210, by running programs such as software rewriting program PP (see FIG. 4 described later) which is stored (installed) in advance in the storage unit 230. Specifically, the control unit 210 is configured to perform various processes by having a processing unit 210a thereof load a program such as the software rewriting program PP stored in advance in the storage unit 230 into the RAM of the memory device 210b, and running that program. The RAM of the memory device 210b provides a working area to the control unit 210.

In the present embodiment, the control unit 210 controls transmission/reception of data during communications, various inputs and outputs, and arithmetic processing.

### (Wide Area Communication Unit)

The wide area communication unit 220 is electrically connected to a data line of the control unit 210. With instructions from the control unit 210, the wide area communication unit 220 is able to perform communication using the same communication protocol as the wide area communication unit 132 (see FIG. 1) of the server 130. Data transmitted/received during communication is converted by the wide area communication unit 220 so as to comply with the communication protocol. Further, the wide area communication unit 220 receives, from the server 130, information regarding software packages FW of the control devices 113(1) to 113(m) in the movable objects 110(1) to 110(n), which information is stored in the storage unit 133 of the server 130.

### (Storage Unit)

The storage unit 230 is electrically connected to a data line of the control unit 210. With instructions from the control unit 210, the storage unit 230 controls writing and reading of information. The storage unit 230, in this example, is a large-capacity storage unit such as a flush memory.

The storage unit 230 stores therein a model information management database DB1, an updating software management database DB2, and an updating software storing database DB3.

### (Short-Range Wireless Communication Unit)

The short-range wireless communication unit 240 in the terminal device 200(1) (distribution source) performs short-range wireless communication with the short-range wireless communication units 240 of the terminal device 200(2) (distribution source) and the terminal devices 200(3) to 200(n) (non-distribution sources). Further, the short-range wireless communication unit 240 in the terminal device 200(2) (distribution source) performs short-range wireless communication with the short-range wireless communication units 240 of the terminal device 200(1) (distribution source) and the terminal devices 200(3) to 200(n) (non-distribution sources).

Examples of the short-range wireless communication includes wireless communication of several meters to approximately 100 meters, such as wireless LAN (Local Area Network) communication which allows communication at a short distance of several tens of meters to approximately 100 meters, and wireless PAN (Personal Area Network) communication which allows communication at a short distance of several meters to several tens of meters.

An example of the wireless LAN communication is wireless LAN communication based on IEEE802.11 standard, typically WiFi (Registered Trademark) standard. An example of the wireless PAN communication is wireless PAN communication based on IEEE802.15 standard, typically Bluetooth (Registered Trademark) standard. In this example, the short-range wireless communication units 240 is configured to perform wireless LAN communication according to the IEEE 802.11 standard.

### (Signal Communication Unit)

The signal communication unit 250 exchanges information with the control devices 113(1) to 113(m) of the work units 111(1) to 111(m), by communication according to a communication standard such as the CAN standard.

### (Power Source Control Unit)

The power source control unit 260 supplies electric power to the control unit 210. In the present embodiment, the power source control unit 260 is connected to the battery BT irrespective of the ON/OFF state of the start switch SW. Specifically, an input end power source line (not shown) of the power source control unit 260 and the battery BT are connected via the power source connection line L3. This way, the electric power from the battery BT is always supplied to the power source control unit 260.

Further, to the control unit 210, the electric power from the battery BT is supplied via the power source control unit 260.

### - Software Configuration of Dedicated Terminal Device (Distribution Source) -

### [First Embodiment-1]

FIG. 4 is a block diagram showing an exemplary software configuration of the dedicated terminal device 200(1), 200(2) (distribution source) shown in FIG. 1 to FIG. 3, in relation to the first embodiment-1. FIG. 5 and FIG. 6 are each a schematic view for explaining an exemplary writing operation of writing an updating software package WFW with respect to the control devices 113(1) to 113(m) in the software configuration shown in FIG. 4. FIG. 5 shows an example where a readable memory space for the software package FW is switched from a first memory space 1131 to a second memory space 1132 to rewrite the software package FW by the processing unit 113a. FIG. 6 shows an example where a readable memory space for the software package FW is switched from the second memory space 1132 to the first memory space 1131 to rewrite the software package FW by the processing unit 113a.

As shown in FIG. 4, the control unit 210 includes: a writing control unit Q1, a reception control unit Q2, a power source control unit Q3, and a transmission control unit Q4. In other words, the software rewriting program PP causes the control unit 210 to execute steps including: a writing control step corresponding to the writing control unit Q1; a reception control step corresponding to the reception control unit Q2; a power source control step corresponding to the power source control unit Q3; and a transmission control step corresponding to the transmission control unit Q4.

As shown in FIG. 5 and FIG. 6, the control devices 113(1) to 113(m) each includes a processing unit 113a, and a memory unit 113b.

The memory unit 113b includes the first memory space 1131, a second memory space 1132, a setting memory space 113s, and a third memory space 1133. Further, the memory unit 113b has a common memory space 113c. The common memory space 113c stores therein a common software package CFW which operates in the processing unit 113a, commonly for both a new version and the current version. The memory spaces may be partitioned memory areas in a single memory device. Alternatively, the memory spaces may be memory spaces of separate memory devices, respectively.

The processing unit 113a may be one which loads information into a separate volatile memory such as RAM and processes the information with a central processing unit (CPU), or a processing device so-called one-chip microcomputer which is a single semiconductor integrated circuit (IC) chip having a central processing unit (CPU), a volatile memory such as RAM, a non-volatile memory such as ROM, and various I/O devices, and the like.

The first memory space 1131 and the second memory space 1132 is a memory space for storing a software package FW and for reading to operate in the control device [113(1) to 113(m)]. The third memory space 1133 is a memory space for temporary storage, and is a volatile memory such as RAM, for example.

### -Control Device-

As shown in FIG. 5, the control device [113(1) to 113(m)], while the software package FW is stored in the first memory space 1131 as a readable memory space for the processing unit 113a of the control device 113 to read out the software package FW (i.e., an operation memory space for operating the software package FW), sets a first read information R1 indicating that the software package FW is readable from the first memory space 1131 in the setting memory space 113s and sets the second memory space 1132 as a non-readable memory space not related to reading of the software package FW by the processing unit 113a (i.e., a rewriting memory space for rewriting the software package FW, not related to operation of the software package FW).

When an updating software package WFW is written in the third memory space 1133, the control device [113(1) to 113(m)] stores the updating software package WFW of the third memory space 1133 in the second memory space 1132, and sets a second read information R2 indicating that the software package FW is readable from the second memory space 1132 in the setting memory space 113s, and sets the second memory space 1132 as the readable memory space (operation memory space) while setting the first memory space 1131 as the non-readable memory space (rewriting memory space).

On the other hand, as shown in FIG. 6, the control device [113(1) to 113(m)], while the software package FW is stored in the second memory space 1132 as the readable memory space (operation memory space), sets the second read information R2 to the setting memory space 113s and sets the first memory space 1131 as the non-readable memory space (rewriting memory space).

When an updating software package WFW is written in the third memory space 1133, the control device [113(1) to 113(m)] stores the updating software package WFW of the third memory space 1133 in the first memory space 1131, and sets the first read information R1 in the setting memory space 113s, and sets the first memory space 1131 as the readable memory space (operation memory space) while setting the second memory space 1132 as the non-readable memory space (rewriting memory space).

### -Terminal Device-

### (Writing Control Step)

In the writing control step, the control unit 210 (see FIG. 4) in the terminal device [200(1), 200(2)] writes an updating software package WFW in the third memory space 1133.

It should be noted that the reception control unit Q2, the reception control step, the power source control unit Q3, the power source control step, the transmission control unit Q4, and the transmission control step are described later.

### [First Embodiment-2]

FIG. 7 is a block diagram showing an exemplary software configuration of the dedicated terminal device 200(1), 200(2) (distribution source) shown in FIG. 1 to FIG. 3, in relation to the first embodiment-2. FIG. 8 and FIG. 9 are each a schematic view for explaining an exemplary writing operation of writing an updating software package WFW with respect to the control devices 113(1) to 113(m) in the software configuration shown in FIG. 7. FIG. 8 shows an example where a readable memory space for the software package FW is switched from a first memory space 1131 to a second memory space 1132 to rewrite the software package FW by the processing unit 113a. FIG. 9 shows an example where a readable memory space for the software package FW is switched from the second memory space 1132 to the first memory space 1131 to rewrite the software package FW by the processing unit 113a.

As shown in FIG. 7, the control unit 210 includes: a retrieval control unit Q0, a writing control unit Q1, a reception control unit Q2, a power source control unit Q3, and a transmission control unit Q4. In other words, the software rewriting program PP causes the control unit 210 to execute steps including: a retrieval control step corresponding to the retrieval control unit Q0; a writing control step corresponding to the writing control unit Q1; a reception control step corresponding to the reception control unit Q2; a power source control step corresponding to the power source control unit Q3; and a transmission control step corresponding to the transmission control unit Q4.

As shown in FIG. 8 and FIG. 9, the control devices 113(1) to 113(m) each includes a processing unit 113a, and a memory unit 113b.

It should be noted that, in the first embodiment-2, the same reference symbols are given to structures substantially the same as those of the first embodiment-1, and the following description mainly discusses the difference from the first embodiment-1.

The memory unit 113b includes the first memory space 1131, a second memory space 1132, and a setting memory space 113s.

### -Control Device-

As shown in FIG. 8, the control device [113(1) to 113(m)], while the software package FW is stored in the first memory space 1131 as a readable memory space for the processing unit 113a of the control device 113 to read out the software package FW (i.e., an operation memory space for operating the software package FW), sets a first read information R1 indicating that the software package FW is readable from the first memory space 1131 in the setting memory space 113s and sets the second memory space 1132 as a non-readable memory space not related to reading of the software package FW by the processing unit 113a (i.e., a rewriting memory space for rewriting the software package FW, not related to operation of the software package FW).

When an updating software package WFW is written in the second memory space 1132, the control device [113(1) to 113(m)] sets a second read information R2 indicating that the software package FW is readable from the second memory space 1132 in the setting memory space 113s, and sets the second memory space 1132 as the readable memory space (operation memory space) while setting the first memory space 1131 as the non-readable memory space (rewriting memory space).

On the other hand, as shown in FIG. 9, the control device [113(1) to 113(m)], while the software package FW is stored in the second memory space 1132 as the readable memory space (operation memory space), sets the second read information R2 to the setting memory space 113s and sets the first memory space 1131 as the non-readable memory space (rewriting memory space).

When an updating software package WFW is written in the first memory space 1131, the control device [113(1) to 113(m)] sets the first read information R1 in the setting memory space 113s, and sets the first memory space 1131 as the readable memory space (operation memory space) while setting the second memory space 1132 as the non-readable memory space (rewriting memory space).

### -Terminal Device-

### (Retrieval Control Step)

In the retrieval control step, the control unit 210 (see FIG. 7) of the terminal device [200(1), 200(2)] retrieves a setting value (i.e., the first read information R1 or the second read information R2) set in the setting memory space 113s.

Specifically, in the retrieval control step, the control unit 210 retrieves the first read information R1, if the first read information R1 is set in the setting memory space 113s (see FIG. 8), whereas it retrieves the second read information R2 if the second read information R2 is set in the setting memory space 113s (see FIG. 9).

Specifically, in the retrieval control step, the control unit 210 inquires of the control device [113(1) to 113(m)] as to which one of the first read information R1 and the second read information R2 is set as the setting value in the setting memory space 113s of the control device [113(1) to 113(m)], and retrieves the read information (first read information R1 or second read information R2) set in the setting memory space 113s from the control device [113(1) to 113(m)].

### (Writing Control Step)

In the writing control step, the control unit 210 writes the updating software package WFW in the memory space, out of the first memory space 1131 and the second memory space 1132, which is set as the non-readable memory space (rewriting memory space), based on the retrieved setting value (first read information R1 or second read information R2).

Specifically, in the writing control step, if the retrieved setting value is the first read information R1 (see FIG. 8), the control unit 210 writes the updating software package WFW in the second memory space 1132 set as the non-readable memory space (rewriting memory space). If the retrieved setting value is the second read information R2 (see FIG. 9), the control unit 210 writes the updating software package WFW in the first memory space 1131 set as the non-readable memory space (rewriting memory space).

It should be noted that the reception control unit Q2, the reception control step, the power source control unit Q3, the power source control step, the transmission control unit Q4, and the transmission control step are described later.

### [First Embodiment-1 and First Embodiment-2]

FIG. 10 and FIG. 11 are each a schematic view for explaining a reading state of a software package FW (updating software package WFW) when the control device [113(1) to 113(m)] is activated next time, in the software configuration related to the first embodiment-1 and the first embodiment-2. FIG. 10 shows a state in which the processing unit 113a reads the software package FW from the second memory space 1132. FIG. 11 shows a state in which the processing unit 113a reads the software package FW from the first memory space 1131.

When an updating software package WFW is written in the second memory space 1132 (see FIG. 5 and FIG. 8), the control device [113(1) to 113(m)] sets the second read information R2 in the setting memory space 113s, and sets the second memory space 1132 as the readable memory space (operation memory space) while setting the first memory space 1131 as the non-readable memory space (rewriting memory space). Then, for example, the following operation is performed at a time of activation next time.

Namely, as shown in FIG. 10, the control device [113(1) to 113(m)] confirms (reads) the setting memory space 113s, and recognizes that the second read information R2 is set in the setting memory space 113s.

Next, the control device [113(1) to 113(m)] reads out the software package FW (the latest updated updating software package WFW) stored in the second memory space 1132, along with the common software package CFW stored in the common memory space 113c, and runs these software packages FW and CFW.

Further, when an updating software package WFW is written in the first memory space 1131 (see FIG. 6 and FIG. 9), the control device [113(1) to 113(m)] sets the first read information R1 in the setting memory space 113s, and sets the first memory space 1131 as the readable memory space (operation memory space) while setting the second memory space 1132 as the non-readable memory space (rewriting memory space). Then, for example, the following operation is performed at a time of activation next time.

Namely, as shown in FIG. 11, the control device [113(1) to 113(m)] confirms (reads) the setting memory space 113s, and recognizes that the first read information R1 is set in the setting memory space 113s.

Next, the control device [113(1) to 113(m)] reads out the software package FW (the latest updated updating software package WFW) stored in the first memory space 1131, along with the common software package CFW stored in the common memory space 113c, and runs these software packages FW and CFW.

### (Writing Control Step)

As hereinabove mentioned, a traditional configuration is not able to rewrite the software package of the control device while the control device is in an active state (i.e., the while the software package is in operation), because the software package of the control device is operating. For this reason, in a traditional configuration, a user is prompted to conduct a turn-off operation for turning off the power source of the control device is prompted. After the turn-off operation (i.e., requesting the user a stopping operation for stopping the software package in the control device, and having the user perform the stopping operation), the software package of the control device is rewritten. Such a configuration needs to request the user to perform the turn-off operation every time the software package of the control device is rewritten, and rewriting of the software package of the control device needs a time to do so.

In this regard, in the writing control step, the control unit 210 writes the updating software package WFW when the control device [113(1) to 113(m)] is in the active state (in this example, when the start switch SW is in the ON-state). More specifically, the updating software package WFW is written without a need of requesting the user to perform the turn-off operation of the power source of the control device [113(1) to 113(m)].

### (Reception Control Step)

An updating software package WFW is not always free of problems. Specifically, the updating software package WFW does not necessarily operate properly, or is not necessarily an authentic package. In some cases, an updating software package WFW may have a problem. Specifically, an updating software package WFW may not properly operate, or may not be an authentic package. If the updating software package WFW contains a problem, the updating software package WFW is preferably recovered without operating the updating software package WFW with a problem in the control device [113(1) to 113(m)]. Further, if the updating software package WFW contains a problem, it is preferable to have the terminal device [200(1), 200(2)] recognize that rewriting of the software package FW of the control device [113(1) to 113(m)] has failed (specifically, the updating software package WFW contains a problem).

In view of this, the control device [113(1) to 113(m)] is configured so as to check if the updating software package WFW contains a problem, after a setting to the setting memory space 113s at a time of writing the updating software package WFW. If there is a problem in the updating software package WFW, if the first read information R1 is set to the setting memory space 113s, the control device [113(1) to 113(m)] changes the setting in the setting memory space 113s from the first read information R1 to the second read information R2 to set the second memory space 1132 as the readable memory space (operation memory space) and set the first memory space 1131 as the non-readable memory space (rewriting memory space). If the second read information R2 is set to the setting memory space 113s, the control device [113(1) to 113(m)] changes the setting in the setting memory space 113s from the second read information R2 to the first read information R1 to set the first memory space 1131 as the readable memory space (operation memory space) and set the second memory space 1132 as the non-readable memory space (rewriting memory space).

Then, the control device [113(1) to 113(m)] transmits rewriting-failed information WFI (see FIG. 5, FIG. 6, FIG. 8, and FIG. 9) indicating a failure in rewriting of the software package FW to the terminal device [200(1), 200(2)].

In the reception control step, the control unit 210 receives the rewriting-failed information WFI from the control device [113(1) to 113(m)].

### (Power Source Control Step)

In the present embodiment, the control device [113(1) to 113(m)] performs the setting to the setting memory space 113s at a time of writing the updating software package WFW, when a turn-off operation for turning off the power source of the control device [113(1) to 113(m)] is conducted (specifically, when the turn-off operation of the start switch SW is received).

If the power source of the control device [113(1) to 113(m)] is turned off immediately after the turn-off operation for turning off the power source of the control device [113(1) to 113(m)], there may not be sufficient time for performing the setting to the setting memory space 113s at a time of writing the updating software package WFW, and setting to the setting memory space 113s may not be reliably performed.

In this regard, in the power source control step, the control unit 210 maintains the power source of the control device [113(1) to 113(m)] in the ON-state even if a turn-off operation for turning off the power source of the control device [113(1) to 113(m)] is performed, until the setting to the setting memory space 113s by the control device [113(1) to 113(m)] is completed. When the setting to the setting memory space 113s by the control device [113(1) to 113(m)] is completed, the power source of the control device [113(1) to 113(m)] is turned off.

The control unit 210 recognizes the turn-off operation of powering off the control device [113(1) to 113(m)], when supply of electric power from the battery BT via the power source connection line L1 is shut-off.

Specifically, in the power source control step, the control unit 210 causes the power source control unit 260 to maintain the power source in the ON-state even if the turn-off operation of the start switch SW is conducted, and have the control device [113(1) to 113(m)] set the setting information to the setting memory space 113s. Then, the control unit 210 turns off the power source of the control device [113(1) to 113(m)], and further instructs the power source control unit 260 to turn off itself. Then, the power source of the control unit 210 is turned off by the power source control unit 260.

### (Transmission Control Step)

In the transmission control step, the control unit 210 transmits the updating software package WFW to the control device [113(1) to 113(m)] of the own movable object [110(1), 110(2)] and/or to at least one other movable object 110(i) via the short-range wireless communication unit 240 and the short-range wireless communication network LN.

In the writing control step, the updating software package WFW transmitted in the transmission control step is written in the third memory space 1133 in the first embodiment-1, and written in a memory space out of the first memory space 1131 and the second memory space 1132 which is set as the non-readable memory space (rewriting memory space).

### (Timing of Setting Read Information to Setting Memory Space)

The control device [113(1) to 113(m)] may be configured to set the read information (i.e., first read information R1 or second read information R2) to the setting memory space 113s, for example, when a turn-off operation for turning off the power source is performed. This way, the read information (i.e., first read information R1 or second read information R2) can be reliably set in the setting memory space 113s after the updating software package WFW is written in the first memory space 1131 or the second memory space 1132.

### [Dedicated Terminal Device (Non-Distribution Source)]

As shown in FIG. 3, the terminal devices 200(3) to 200(n) (non-distribution sources) each has updating software packages WFW which do not have pieces of model information MI of other movable objects 110(i) in the terminal devices 200(1) and 200(2) (distribution source).

### [Second Embodiment]

FIG. 12 to FIG. 14 are structural view schematically showing an exemplary software rewriting system 100 related to a second embodiment.

FIG. 12 is a schematic view of a state where a general-use terminal device 300 is communicating with the server 130 via a wide area network WN. FIG. 13 is a schematic view showing a state where the general-use terminal device 300 having communicated with the server 130 is communicating, via a short-range wireless communication network LN, with a dedicated terminal device 200(1) that could serve as a distribution source, in the software rewriting system 100 shown in FIG. 12. FIG. 14 is a schematic view showing a state where the general-use terminal device 300 having communicated with the server 130 is communicating, via a short-range wireless communication network LN, with a dedicated terminal device 200(3) that does not substantially serve as a distribution source, in the software rewriting system 100 shown in FIG. 12.

The software rewriting system 100 related to the second embodiment includes a general-use terminal device 300 in the software rewriting system 100 related to the first embodiment.

Next, a system configuration of the general-use terminal device (300) is described with reference to FIG. 12 to FIG. 14.

### [General-Use Terminal Device]

### - Hardware Configuration of General-Use Terminal Device -

As shown in FIG. 12 to FIG. 14, the terminal device 300 includes a control unit 310 (an example of computer), a wide area communication unit 320, a storage unit 330, a short-range wireless communication unit 340, and a user interface unit 350. It should be noted that a plurality of terminal devices 300 may be provided.

Here, the general-use terminal device 300 is, for example, a multi-function portable communication terminal device such as a tablet computer, a smartphone, and the like.

### (Control Unit)

The control unit 310 includes: a processing unit 310a constituted by a so-called computer such as a CPU (Central Processing Unit); and a memory unit 310b including a volatile memory such as a ROM (Random Only Memory), a RAM (Random Access Memory).

The control unit 310 is configured to achieve various functions necessary for the control unit 310, by running programs such as software rewriting program PP which is stored (installed) in advance in the storage unit 330. Specifically, the control unit 310 is configured to perform various processes by having a processing unit 310a thereof load a program such as the software rewriting program PP stored in advance in the storage unit 330 into the RAM of the memory device 310b, and running that program. The RAM of the memory device 310b provides a working area to the control unit 310.

In the present embodiment, the control unit 310 controls transmission/reception of data during communications, various inputs and outputs, and arithmetic processing.

### (Wide Area Communication Unit)

The wide area communication unit 320 is electrically connected to a data line of the control unit 310. With instructions from the control unit 310, the wide area communication unit 320 is able to perform communication using the same communication protocol as the wide area communication unit 132 (see FIG. 12) of the server 130. Data transmitted/received during communication is converted by the wide area communication unit 320 so as to comply with the communication protocol. Further, the wide area communication unit 320 receives, from the server 130, information regarding software packages FW of the control devices 113(1) to 113(m) in the movable objects 110(1) to 110(n), which information is stored in the storage unit 133 of the server 130.

### (Storage Unit)

The storage unit 330 is electrically connected to a data line of the control unit 310. With instructions from the control unit 310, the storage unit 330 controls writing and reading of information. The storage unit 330, in this example, is a large-capacity storage unit such as a flush memory. It should be noted that, the software rewriting program PP is stored (installed) in advance in the storage unit 330.

It should be noted that, the software rewriting program PP, in this example, is a program so-called an app used in a multi-function portable communication terminal device such as a tablet computer and a smartphone, and is downloaded from a not-shown program server via communication means such as the internet.

The storage unit 330 stores therein a model information management database DB1, an updating software management database DB2, and an updating software storing database DB3.

### (Short-Range Wireless Communication Unit)

The short-range wireless communication unit 340 in the terminal device 300 performs short-range wireless communication with short-range wireless communication units 240 of the terminal devices 200(1) to 200(n).

### (User Interface Unit)

The user interface unit 350 includes an output device such as a display device and an input device such as touch panel. Typically, the user interface unit 350 is capable of activating and controlling the software rewriting program PP, and displaying progress information and the like.

### - Software Configuration of General-Use Terminal Device -

### [Second Embodiment-1]

FIG. 15 is a block diagram showing an exemplary software configuration of the general-use terminal device 300 shown in FIG. 12 to FIG. 14, in relation to a second embodiment-1.

As shown in FIG. 15, the control unit 310 includes: a writing control unit Q1, a reception control unit Q2, a power source control unit Q3, and a transmission control unit Q4. In other words, the software rewriting program PP causes the control unit 310 to execute steps including: a writing control step corresponding to the writing control unit Q1; a reception control step corresponding to the reception control unit Q2; a power source control step corresponding to the power source control unit Q3; and a transmission control step corresponding to the transmission control unit Q4.

### [Second Embodiment-2]

FIG. 16 is a block diagram showing an exemplary software configuration of the general-use terminal device 300 shown in FIG. 12 to FIG. 14, in relation to a second embodiment-2.

As shown in FIG. 16, the control unit 310 includes: a retrieval control unit Q0, a writing control unit Q1, a reception control unit Q2, a power source control unit Q3, and a transmission control unit Q4. In other words, the software rewriting program PP causes the control unit 310 to execute steps including: a retrieval control step corresponding to the retrieval control unit Q0; a writing control step corresponding to the writing control unit Q1; a reception control step corresponding to the reception control unit Q2; a power source control step corresponding to the power source control unit Q3; and a transmission control step corresponding to the transmission control unit Q4.

It should be noted that, regarding the writing control step, the reception control step, the power source control step, and the transmission control step performed by the control unit 310 in the general-use terminal device 300 shown in FIG. 15, the following describes mostly the difference from the writing control step, the reception control step, the power source control step, and the transmission control step performed by the control unit 210 of the terminal device [200(1), 200(2)] related to the first embodiment-1. Further, regarding the retrieval control step, the writing control step, the reception control step, the power source control step, and the transmission control step performed by the control unit 310 in the general-use terminal device 300 shown in FIG. 16, the following describes mostly the difference from the retrieval control step, the writing control step, the reception control step, the power source control step, and the transmission control step performed by the control unit 210 of the terminal device [200(1), 200(2)] related to the first embodiment-2.

In the power source control step and the transmission control step performed by the general-use terminal device 300 shown in FIG. 15 and FIG. 16, the following operations are further performed.

Namely, the movable objects 110(1) to 110(n) are each configured to transmit to the terminal device 300 turn-off information indicating that a turn-off operation for turning off the control device [113(1) to 113(m)] is conducted.

The turn-off information is regarded as shut-off information of power supply from the battery BT via the power source connection line L1.

### (Power Source Control Step)

In the power source control step, the control unit 310 maintains the power source of the control device [113(1) to 113(m)] in the ON-state [Specifically, provides the control unit 210 of the movable object [110(1) to 110(n)] with an instruction to maintain the ON-state of the power source of the control device [113(1) to 113(m)]], even if the turn-off operation for turning off the power source of the control device [113(1) to 113(m)] is conducted in the movable object [110(1) to 110(n)] (specifically, even if the turn-off information is received), until the setting to the setting memory space 113s by the control device [113(1) to 113(m)] is completed. When the setting to the setting memory space 113s by the control device [113(1) to 113(m)] is completed, the power source of the control device [113(1) to 113(m)] is turned off [specifically, provides the control unit 210 of the movable object [110(1) to 110(n)] to turn off the power source of the control device [113(1) to 113(m)]].

Specifically, in the power source control step, the control unit 210 in the movable object [110(1) to 110(n)] causes the power source control unit 260 to maintain the power source in the ON-state even if the turn-off operation of the start switch SW is conducted, and have the control device [113(1) to 113(m)] set the setting information to the setting memory space 113s. The control unit 310 then instructs the control unit 210 in the movable object [110(1) to 110(n)] to turn off the power source of the control device [113(1) to 113(m)]. The control unit 210 turns off the power source of the control device [113(1) to 113(m)], and further instructs the power source control unit 260 to turn off itself. Then, the power source of the control unit 210 is turned off by the power source control unit 260.

### (Transmission Control Step)

The control unit 310 in the transmission control step transmits the updating software package WFW to the electric device [the movable objects 110(1) to 110(n) in this example] via the short-range wireless communication unit 340 and the short-range wireless communication network LN.

In the writing control step, the updating software package WFW transmitted via the short-range wireless communication unit 340 and the short-range wireless communication network LN in the transmission control step is written in the third memory space 1133 in the second embodiment-1, and written in a memory space out of the first memory space 1131 and the second memory space 1132 which is set as the non-readable memory space (rewriting memory space) in the second embodiment-2.

It should be noted that the configuration of the software rewriting system 100 related to the first embodiment (first embodiment-1 or first embodiment-2) may be combined with the configuration of the software rewriting system 100 related to the second embodiment.

### [Software Rewriting Process in The Software Rewriting System]

Next, the following describes, with reference to FIG. 17 to FIG. 18, an exemplary software rewriting process in the software rewriting system 100.

The following description of an exemplary process shown in FIG. 17 and FIG. 18 deals with a case where the server 130 is a stationary computer, and the updating software package WFW is rewritten in the control device 113 while the control device 113 in the dedicated terminal device 200(1) (distribution source) is in the active state.

FIG. 17 and FIG. 18 are each a flowchart showing an exemplary software rewriting process taking place in the software rewriting system 100 of the first embodiment shown in FIG. 1 to FIG. 11. FIG. 17 shows a first half of an exemplary process, and FIG. 18 shows a last half of the exemplary process.

### -Control Device-

As shown in FIG. 17, when a turn-on operation of the start switch SW is conducted, the control device 113 is powered on in step S1, and reads the read information set in the setting memory space 113s in step S1.1. In step S1.1.1, the control device 113 reads the software package FW from the first memory space 1131 (see FIG. 5 and FIG. 8) if the read information confirmed is the first read information R1, and reads the software package FW from the second memory space 1132 (see FIG. 6 and FIG. 9) if the read information confirmed is the second read information R2. This way, the control device 113 can boot the software package FW.

Next, the control device 113 reports a piece of update information such as the version of the current software package FW to the terminal device 200(1) in step S2.

### -Terminal Device-

Upon reception of the piece of update information such as the version of the current software package FW from the control device 113, the terminal device 200(1) connects to the server 130 in step S3, notifies the server 130 of the activation of the control device 113 in step S4, and reports the piece of update information such as the version of the current software package FW to the server 130 in step S5.

### -Server-

Upon reception of the report that the control device 113 is activated, and the piece of update information such as the version of the current software package FW from the terminal device 200(1), the server 130 requests for connection to the terminal device 200(1) in step S6.

### -Terminal Device-

Upon reception of the request for connection from the server 130, the terminal device 200(1) connects to the server 130 in step S6.1.

### -Server-

Upon connecting with the terminal device 200(1), the server 130 transmits an updating software package WFW to the terminal device 200(1) in step S6.1.1, if the software package FW of the control device 113 is not the latest package.

### -Terminal Device-

When the updating software package WFW is received from the server 130, the terminal device 200(1) gives the control device 113 update notification of the software package FW in step S7, and inquires of the control device 113 the read information set to the setting memory space 113s (see FIG. 8 and FIG. 9) in the case of first embodiment-2.

### -Control Device-

In first embodiment-2, the control device 113 transmits the read information set to the setting memory space 113s to the terminal device 200(1) in step S7.1.

### -Terminal Device-

In first embodiment-1, after the update notification of the software package FW to the control device 113, the terminal device 200(1) transmits the updating software package WFW to the control device 113 and writes the updating software packages WFW in the third memory space 1133 (see FIG. 5 and FIG. 6) of the control device 113 in step S7.1.1.

Upon reception of the read information set to the setting memory space 113s in the first embodiment-2, the terminal device 200(1) transmits the updating software package WFW to the control device 113 in step S7.1.1.

### -Control Device-

In step 8 of the first embodiment-1, if the read information is the first read information R1, the control device 113 writes the updating software package WFW of the third memory space 1133 in the second memory space 1132 (see FIG. 5) of the control device 113, and if the read information is the second read information R2, the control device 113 writes the updating software package WFW of the third memory space 1133 in the first memory space 1131 (see FIG. 6) of the control device 113. Further, in step 8 of the first embodiment-2, if the read information is the first read information R1, the control device 113 writes the updating software package WFW in the second memory space 1132 (see FIG. 8) of the control device 113, and if the read information is the second read information R2, the control device 113 writes the updating software package WFW in the first memory space 1131 (see FIG. 9) of the control device 113.

When a turn-off operation of the start switch SW is conducted in step S9, the control device 113 in step S9.1 sets the second read information R2 to the setting memory space 113s to set the second memory space 1132 as the readable memory space (operation memory space) while setting the first memory space 1131 as the non-readable memory space (rewriting memory space) if the updating software package WFW is written in the second memory space 1132, and sets the first read information R1 to the setting memory space 113s to set the first memory space 1131 as the readable memory space (operation memory space) while setting the second memory space 1132 as the non-readable memory space (rewriting memory space) if the updating software package WFW is written in the first memory space 1131. Then, the power source is turned off in step S9.2.

### -Terminal Device-

When the turn-off operation of the start switch SW is conducted, the terminal device 200(1) notifies the server 130 of the stopping of the control device 113 in step S10.

### -Control Device-

As shown in FIG. 18, when a turn-on operation of the start switch SW is conducted at the next activation, the control device 113 is powered on in step S11, and reads the read information set in the setting memory space 113s in step S11.1. In step S11.1.1, the control device 113 reads the software package FW from the second memory space 1132 (see FIG. 10) if the read information confirmed is the second read information R2, and reads the software package FW from the first memory space 1131 (see FIG. 11) if the read information confirmed is the first read information R1. This way, the control device 113 can boot the software package FW.

### (When Reading of Software Package Failed)

The control device 113 confirms if the updating software package WFW contains a problem, and if the updating software package WFW contains a problem, the following operation is performed, assuming that reading of the software package FW has failed.

If the updating software package WFW is read from the second memory space 1132 and a problem is found in the updating software package WFW, the control device 113 in step S11.2 sets the first read information R1 to the setting memory space 113s to set back the first memory space 1131 as the readable memory space (operation memory space) while setting back the second memory space 1132 as the non-readable memory space (rewriting memory space). If the updating software package WFW is read from the first memory space 1131 and the problem is found in the updating software package WFW, the control device 113 in step S11.2 sets the second read information R2 to the setting memory space 113s to set back the second memory space 1132 as the readable memory space (operation memory space) while setting back the first memory space 1131 as the non-readable memory space (rewriting memory space).

The control device 113 confirms the read information set in the setting memory space 113s in step S11.3. In step S11.3.1, the control device 113 reads the software package FW from the first memory space 1131 (see FIG. 5 and FIG. 8) if the read information confirmed is the first read information R1, and reads the software package FW from the second memory space 1132 (see FIG. 6 and FIG. 9) if the read information confirmed is the second read information R2. This way, the control device 113 can boot the software package FW before rewriting, which has been properly operated. Then, the control device 113 transmits rewriting-failed information WFI (see FIG. 5, FIG. 6, FIG. 8, and FIG. 9) indicating a failure in rewriting of the software package FW to the terminal device 200(1) in step S11.4.

### -Control Device-

The control device 113, in step S12, reports a piece of update information such as the version of the current software package FW (the piece of update information such as the latest version if the rewriting is successful, and the piece of update information such as the previous version if the rewriting has failed) to the terminal device 200(1).

### -Terminal Device-

Upon reception of the piece of update information such as the version of the current software package FW from the control device 113, the terminal device 200(1) connects to the server 130 in step S13, notifies the server 130 of the activation of the control device 113 in step S14, and reports the piece of update information such as the version of the current software package FW to the server 130 in step S15.

It should be noted that the above-described exemplary process deals with a case where the rewriting with the updating software package WFW in the control device 113 is performed while the control device 113 is in the active state; however, the rewriting with the updating software package WFW in the control device 113 may be performed when a turn-off operation of the power source of the control device 113 is conducted. In such an event, the process of step S9 in the software rewriting process shown in FIG. 17 may be performed before the process of step S8. Further, in the above example, the rewriting of the software package FW in the control device 113 is performed in the control device 113 of the movable object 110(1) of the terminal device 200(1); however instead of or in addition to this, the rewriting may be performed in a control device 113 of the movable object [110(2) to 110(n)] of at least one other terminal device [200(2) to 200(n)] through a short-range wireless communication with the terminal device 200(1). Further, a general-use terminal device 300 may be adopted instead of or in addition to the dedicated terminal device 200(1). In cases of using the general-use terminal device 300, the similar process of rewriting the software package FW can be performed to a plurality of control devices 113(1) to 113(m). Further, although the terminal device having conducted the wide area communication with the server 130 is the dedicated terminal device 200(1) (distribution source), such a terminal device may be the dedicated terminal device 200(2) (distribution source). Further, although the server 130 is a stationary type computer in the above, the server 130 may be a dedicated terminal device [200(1), 200(2)] and/or a general-use terminal device 300.

### [Regarding the Present Embodiment]

### (First Embodiment-1)

The terminal device [200(1), 200(2)] related to the first embodiment-1 and the terminal device 300 related to the second embodiment which constitutes the first embodiment-1 are each configured as follows. Namely, the control device [113(1) to 113(m)], while the software package FW is stored in the first memory space 1131 as the readable memory space (operation memory space), sets the first read information R1 to the setting memory space 113s and sets the second memory space 1132 as the non-readable memory space (rewriting memory space). When an updating software package WFW is written in the third memory space 1133, the control device [113(1) to 113(m)] stores the updating software package WFW of the third memory space 1133 in the second memory space 1132, and sets the second read information R2 in the setting memory space 113s, and sets the second memory space 1132 as the readable memory space (operation memory space) while setting the first memory space 1131 as the non-readable memory space (rewriting memory space). Further, the control device [113(1) to 113(m)], while the software package FW is stored in the second memory space 1132 as the readable memory space (operation memory space), sets the second read information R2 to the setting memory space 113s and sets the first memory space 1131 as the non-readable memory space (rewriting memory space). When an updating software package WFW is written in the third memory space 1133, the control device [113(1) to 113(m)] stores the updating software package WFW of the third memory space 1133 in the first memory space 1131, and sets the first read information R1 in the setting memory space 113s, and sets the first memory space 1131 as the readable memory space (operation memory space) while setting the second memory space 1132 as the non-readable memory space (rewriting memory space).

Since the terminal device [200(1), 200(2), 300] writes an updating software package WFW in the third memory space 1133 of the related control device [113(1) to 113(m)], the software package FW of the control device [113(1) to 113(m)] can be rewritten irrespective of the active state of the control device [113(1) to 113(m)] [i.e., irrespective of whether or not the software package FW of the control device [113(1) to 113(m)] is in operation]. This configuration can eliminate an operation of having the user to select whether to rewrite the software package FW every time the software package FW of the control device [113(1) to 113(m)] is to be rewritten. The above configuration can eliminate the need for having a user intentionally make an operation of rewriting the software package FW every time the software package FW of the control device [113(1) to 113(m)] is to be rewritten. Thus, an improvement in the convenience at a time of rewriting the software package FW of the control device [113(1) to 113(m)] is possible.

### (First Embodiment-2)

The terminal device [200(1), 200(2)] related to the first embodiment-2 and the terminal device 300 related to the second embodiment which constitutes the first embodiment-2 are each configured as follows. Namely, the control device [113(1) to 113(m)], while the software package FW is stored in the first memory space 1131 as the readable memory space (operation memory space), sets the first read information R1 to the setting memory space 113s and sets the second memory space 1132 as the non-readable memory space (rewriting memory space). When an updating software package WFW is written in the second memory space 1132, the control device [113(1) to 113(m)] sets the second read information R2 in the setting memory space 113s, and sets the second memory space 1132 as the readable memory space (operation memory space) while setting the first memory space 1131 as the non-readable memory space (rewriting memory space). Further, the control device [113(1) to 113(m)], while the software package FW is stored in the second memory space 1132 as the readable memory space (operation memory space), sets the second read information R2 to the setting memory space 113s and sets the first memory space 1131 as the non-readable memory space (rewriting memory space). When an updating software package WFW is written in the first memory space 1131, the control device [113(1) to 113(m)] sets the first read information R1 in the setting memory space 113s, and sets the first memory space 1131 as the readable memory space (operation memory space) while setting the second memory space 1132 as the non-readable memory space (rewriting memory space).

Since the terminal device [200(1), 200(2), 300] reads the setting value set in the setting memory space 113s of the related control device [113(1) to 113(m)] and writes an updating software package WFW in a memory space, out of the first memory space 1131 and the second memory space 1132, which is set as the non-readable memory space (rewriting memory space) based on the setting value, the software package FW of the control device [113(1) to 113(m)] can be rewritten irrespective of the active state of the control device [113(1) to 113(m)] [i.e., irrespective of whether or not the software package FW of the control device [113(1) to 113(m)] is in operation]. This configuration can eliminate an operation of having the user to select whether to rewrite the software package FW every time the software package FW of the control device [113(1) to 113(m)] is to be rewritten. The above configuration can eliminate the need for having a user intentionally make an operation of rewriting the software package FW every time the software package FW of the control device [113(1) to 113(m)] is to be rewritten. Thus, an improvement in the convenience at a time of rewriting the software package FW of the control device [113(1) to 113(m)] is possible.

### (First Embodiment-1, First Embodiment-2, and Second Embodiment)

The terminal device [200(1), 200(2)] related to each of the first embodiment-1 and the first embodiment-2 and the terminal device 300 related to the second embodiment which constitutes any one of the first embodiment-1 and the first embodiment-2 are each configured as follows. Namely, the updating software package WFW is written while the control device [113(1) to 113(m)] is in the active state [i.e., the software package FW of the control device [113(1) to 113(m)] is in operation]. This way, the software package FW of the control device [113(1) to 113(m)] can be rewritten, without a need of requesting the turn-off operation of the power source of the control device [113(1) to 113(m)] to the user, every time the software package FW of the control device [113(1) to 113(m)] is to be rewritten.

The terminal device [200(1), 200(2)] related to each of the first embodiment-1 and the first embodiment-2 and the terminal device 300 related to the second embodiment which constitutes any one of the first embodiment-1 and the first embodiment-2 are each configured as follows. Namely, the control device [113(1) to 113(m)] is configured so as to check if the updating software package WFW contains a problem, after a setting to the setting memory space 113s at a time of writing the updating software package WFW. If there is a problem in the updating software package WFW, if the first read information R1 is set to the setting memory space 113s, the control device [113(1) to 113(m)] changes the setting in the setting memory space 113s from the first read information R1 to the second read information R2 to set the second memory space 1132 as the readable memory space (operation memory space) and set the first memory space 1131 as the non-readable memory space (rewriting memory space). If the second read information R2 is set to the setting memory space 113s, the control device [113(1) to 113(m)] changes the setting in the setting memory space 113s from the second read information R2 to the first read information R1 to set the first memory space 1131 as the readable memory space (operation memory space) and set the second memory space 1132 as the non-readable memory space (rewriting memory space). This way, the previous version of software package FW which has been properly operated can be operated in the control device [113(1) to 113(m)]. If the updating software package WFW contains a problem, the software package FW of the previous version can be recovered without operating the updating software package WFW with a problem in the control device [113(1) to 113(m)]. Further, the control device [113(1) to 113(m)] transmits the rewriting-failed information WFI to the terminal device, and the terminal device receives the rewriting-failed information WFI from the control device [113(1) to 113(m)]. This way, if the updating software package WFW contains a problem, the terminal device [200(1), 200(2), 300] can recognize that rewriting of the software package FW of the control device [113(1) to 113(m)] has failed (specifically, the updating software package WFW contains a problem).

The terminal device [200(1), 200(2)] related to each of the first embodiment-1 and the first embodiment-2 and the terminal device 300 related to the second embodiment which constitutes any one of the first embodiment-1 and the first embodiment-2 are each configured as follows. Namely, the terminal device [200(1), 200(2), 300] maintains the power source of the control device [113(1) to 113(m)] in the ON-state even if a turn-off operation for the power source of the control device [113(1) to 113(m)] is performed, until the setting to the setting memory space 113s by the control device [113(1) to 113(m)] is completed. When the setting to the setting memory space 113s by the control device [113(1) to 113(m)] is completed, the power source of the control device [113(1) to 113(m)] is turned off. This way, there will be time for performing setting to the setting memory space 113s at a time of writing the updating software package WFW, and the setting to the setting memory space 113s can be reliably performed.

Further, in the terminal device [200(1), 200(2)] related to each of the first embodiment-1 and the first embodiment-2 and the terminal device 300 related to the second embodiment which constitutes any one of the first embodiment-1 and the first embodiment-2, the control device [113(1) to 113(m)] is mounted in the movable object [110(1) to 110(n)]. With this, the software package FW of the control device [113(1) to 113(m)] mounted in the movable object [110(1) to 110(n)] can be rewritten, irrespective of whether or not the control device [113(1) to 113(m)] mounted in the movable object [110(1) to 110(n)] is in the active state [i.e., irrespective of whether or not the software package Fw of the control device [113(1) to 113(m)] is in operation]. The above configuration can eliminate the operation of having a user select whether to rewrite the software package FW every time the software package FW of the control device [113(1) to 113(m)] mounted in the movable object [110(1) to 110(n)] is to be rewritten. The above configuration can eliminate the need for having a user intentionally make an operation of rewriting the software package FW every time the software package FW of the control device [113(1) to 113(m)] mounted in the movable object [110(1) to 110(n)] is to be rewritten. Thus, convenience at a time of rewriting the software package FW of the control device [113(1) to 113(m)] mounted in the movable object [110(1) to 110(n)] can be improved.

### (First Embodiment-1 and First Embodiment-2)

Further, in the terminal device [200(1), 200(2)] related to the first embodiment-1 and the first embodiment-2, the movable object [110(1), 110(2)] includes a short-range wireless communication unit 240 configured to communicate with at least one other movable object 110(i) other than the movable object 110(1), 110(2) via a short-range wireless communication network LN. With this, the software package FW of the control device [113(1) to 113(m)] mounted in the movable object 110(i) can be reliably rewritten with an updating software package WFW within the communication range of the short-range wireless communication network LN. Further, the updating software package WFW is transmitted to the control device [113(1) to 113(m)] in the own movable object [110(1), 110(2)]. With this, the software package FW of the control device [113(1) to 113(m)] mounted in the own movable object [110(1), 110(2)] can be reliably rewritten with the updating software package WFW. Thus, rewriting with the updating software package WFW can be reliably executed in the control device [113(1) to 113(m)] of the own movable object [110(1), 110(2)]. Further, the updating software package WFW is transmitted to another movable object 110(i) via the short-range wireless communication unit 240 and the short-range wireless communication network LN. With this, the software package FW of the control device [113(1) to 113(m)] mounted in the at least one other movable object 110(i) can be reliably rewritten with the updating software package WFW. Thus, rewriting with the updating software package WFW can be reliably executed in the control device [113(1) to 113(m)] mounted in the at least one other movable object 110(i).

### (Second Embodiment)

Further, in the terminal device 300 related to the second embodiment constituting the first embodiment-1 and the first embodiment-2, the control device [113(1) to 113(m)] is mounted in an electric device [the movable objects 110(1) to 110(n) in this example]. The terminal device 300 functions as a multi-function portable communication terminal device, and includes a short-range wireless communication unit 340 configured to communicate with the electric device via a short-range wireless communication network LN. With this, a multi-function portable communication terminal device such as a tablet computer or a smartphone can be used as the publicly-available general-use terminal device 300, and the workability in rewriting the software package FW of the control device [113(1) to 113(m)] mounted in an electric device can be improved. Then, the terminal device 300 transmits an updating software package WFW to the electric device via the short-range wireless communication unit 340 and the short-range wireless communication network LN. With this, the software package FW of the control device [113(1) to 113(m)] mounted in the electric device can be reliably rewritten with the updating software package WFW. Thus, rewriting with the updating software package WFW can be reliably executed in the control device [113(1) to 113(m)] mounted in the electric device [the movable objects 110(1) to 110(n) in this example].

### (Regarding Other Embodiments)

The software rewriting system 100 related to the above embodiment deal with a case of applying the same to agricultural traveling work machines such as combine harvesters, tillers, rice transplanters as the movable objects 110; however, application of the above-disclosed technology is not limited to them and is also applicable to construction travel work machines such as tractors, shovel cars, wheel loaders, and carriers, and to ships such as pleasure boat, fishing boat.

Further, in the above movable objects 110(1) to 110(n), a single control device 113 is provided for a single work unit 111; however, a plurality of control devices 113 may be provided for a single work unit 111.

Further, the electric device can be an electric device used in an electric power facility such as an electric power generator, instead of the above-described movable object.

The present invention is not limited to the embodiments described above, and can be implemented in various other forms. For that reason, such embodiments are merely illustrative in all respects, and should not be construed as limiting. The scope of the present invention is indicated by the scope of the claims, and is not bound in any way in the text of the above description. Furthermore, all variations and modifications falling within the equivalent scope of the claims are within the scope of the present invention.

This application claims priority based on Japanese Patent Application No. 2016-038930 filed on March 1, 2016 in Japan. The entire contents of the application is hereby incorporated by reference.

### Industrial applicability

The present invention relates to a terminal device and a software rewriting program for use in a software rewriting system configured to rewrite a software package of a control device, and is particularly suitable for application to improve the convenience at a time of rewriting the software package of a control device without a need of having the user to intentionally perform an operation of rewriting the software package every time the software package of the control device is to be rewritten.

### Reference Signs List

- 100: software rewriting system
- 110: movable object
- 111: work unit
- 113: control device
- 1131: first memory space
- 1132: second memory space
- 1133: third memory space
- 113a: processing unit
- 113b: memory unit
- 113c: common memory space
- 113s: setting memory space
- 120: remote monitoring center
- 130: server
- 131: control unit
- 131a: processing unit
- 131b: memory device
- 132: wide area communication unit
- 133: storage unit
- 200: dedicated terminal device
- 210: control unit
- 210a: processing unit
- 210b: memory device
- 220: wide area communication unit
- 230: storage unit
- 240: short-range wireless communication unit
- 250: signal communication unit
- 260: power source control unit
- 300: general-use terminal device
- 310: control unit
- 310a: processing unit
- 310b: memory device
- 320: wide area communication unit
- 330: storage unit
- 340: short-range wireless communication unit
- 350: user interface unit
- BT: battery
- DB: updating software database
- DB1: model information management database
- DB2: updating software management database
- DB3: updating software storing database
- FW: software package of control device
- L1: power source connection line
- L2: power source connection line
- L3: power source connection line
- LN: short-range wireless communication network
- PP: software rewriting program
- Q0: retrieval control unit
- Q1: writing control unit
- Q2: reception control unit
- Q3: power source control unit
- Q4: transmission control unit
- R1: first read information
- R2: second read information
- SW: start switch
- WFI: rewriting-failed information
- WFW: updating software package
- WN: wide area network

## Claims

1. A terminal device for use in a software rewriting system configured to rewrite a software package of a control device, wherein:
the control device includes a processing unit, a first memory space, a second memory space, a setting memory space, and a third memory space;
while the software package is stored in the first memory space as a readable memory space for the processing unit of the control device to read out the software package, first read information indicating that the software package is readable from the first memory space is set in the setting memory space and the second memory space is set as a non-readable memory space not related to reading of the software package by the processing unit;
when an updating software package is written in the third memory space, the updating software package stored in the third memory space is stored in the second memory space, second read information indicating that the software package is readable from the second memory space is set in the setting memory space, and the second memory space is set as the readable memory space while the first memory space is set as the non-readable memory space;
while the software package is stored in the second memory space as the readable memory space, the second read information is set in the setting memory space and the first memory space is set as the non-readable memory space;
when the updating software package is written in the third memory space, the updating software package stored in the third memory space is stored in the first memory space, the first read information is set in the setting memory space, and the first memory space is set as the readable memory space while the second memory space is set as the non-readable memory space; and
the terminal device writes the updating software package in the third memory space.

2. A terminal device for use in a software rewriting system configured to rewrite a software package of a control device, wherein:
the control device includes a processing unit, a first memory space, a second memory space, and a setting memory space;
while the software package is stored in the first memory space as a readable memory space for the processing unit of the control device to read out the software package, first read information indicating that the software package is readable from the first memory space is set in the setting memory space and the second memory space is set as a non-readable memory space not related to reading of the software package by the processing unit;
when an updating software package is written in the second memory space, second read information indicating that the software package is readable from the second memory space is set in the setting memory space, and the second memory space is set as the readable memory space while the first memory space is set as the non-readable memory space;
while the software package is stored in the second memory space as the readable memory space, the second read information is set in the setting memory space and the first memory space is set as the non-readable memory space;
when the updating software package is written in the first memory space, the first read information is set in the setting memory space, and the first memory space is set as the readable memory space while the second memory space is set as the non-readable memory space; and
the terminal device retrieves a setting value set in the setting memory space, and based on the setting value retrieved, writes the updating software package in a memory space, out of the first memory space and the second memory space, set as the non-readable memory space.

3. The terminal device according to claim 1 or 2, wherein
the updating software package is written while the control device is in an active state.

4. The terminal device according to any one of claims 1 to 3, wherein:
the control device checks if there is any problem in the updating software package, after setting to the setting memory space at a time of writing in the updating software package, and if there is a problem in the updating software package, if the first read information is set to the setting memory space, the setting in the setting memory space is changed from the first read information to the second read information to set the second memory space as the readable memory space and set the first memory space as the non-readable memory space, whereas if the second read information is set to the setting memory space, the setting in the setting memory space is changed from the second read information to the first read information to set the first memory space as the readable memory space and set the second memory space as the non-readable memory space;
rewriting-failed information indicating a failure in rewriting of the software package is transmitted to the terminal device; and
the terminal device receives the rewriting-failed information from the control device.

5. The terminal device according to any one of claims 1 to 4, wherein:
the control device performs the setting to the setting memory space at a time of writing in the updating software package when a turn-off operation of turning off a power source of the control device is conducted; and
the terminal device is configured to maintain the power source of the control device in the ON-state even when the turn-off operation is conducted, until the setting to the setting memory space by the control device is completed, and turn off the power source of the control device when the setting to the setting memory space by the control device is completed.

6. The terminal device according to any one of claims 1 to 5, wherein
the control device is mounted in a movable object.

7. The terminal device according to claim 6, wherein:
the terminal device is provided in the movable object;
the terminal device includes a short-range wireless communication unit configured to perform communication with at least one other movable object different from the movable object, via a short-range wireless communication network; and
the updating software package is transmitted to the control device of an own movable object and/or is transmitted to the at least one other movable object via the short-range wireless communication unit and the short-range wireless communication network.

8. The terminal device according to any one of claims 1 to 5, wherein:
the control device is mounted in an electric device;
the terminal device functions as a multi-function portable communication terminal device; and
the terminal device includes a short-range wireless communication unit configured to communicate with the electric device via a short-range wireless communication network; and
the terminal device transmits the updating software package to the electric device via the short-range wireless communication unit and the short-range wireless communication network.

9. A software rewriting program of a terminal device for use in a software rewriting system configured to rewrite a software package of a control device, wherein:
the control device includes a processing unit, a first memory space, a second memory space, a setting memory space, and a third memory space;
while the software package is stored in the first memory space as a readable memory space for the processing unit of the control device to read out the software package, first read information indicating that the software package is readable from the first memory space is set in the setting memory space and the second memory space is set as a non-readable memory space not related to reading of the software package by the processing unit;
when an updating software package is written in the third memory space, the updating software package stored in the third memory space is stored in the second memory space, second read information indicating that the software package is readable from the second memory space is set in the setting memory space, and the second memory space is set as the readable memory space while the first memory space is set as the non-readable memory space;
while the software package is stored in the second memory space as the readable memory space, the second read information is set in the setting memory space and the first memory space is set as the non-readable memory space;
when the updating software package is written in the third memory space, the updating software package stored in the third memory space is stored in the first memory space, the first read information is set in the setting memory space, and the first memory space is set as the readable memory space while the second memory space is set as the non-readable memory space;
the terminal device comprises a computer, and
the program causes the computer to execute steps including a writing control step of writing the updating software package in the third memory space.

10. A software rewriting program of a terminal device for use in a software rewriting system configured to rewrite a software package of a control device, wherein:
the control device includes a processing unit, a first memory space, a second memory space, and a setting memory space;
while the software package is stored in the first memory space as a readable memory space for the processing unit of the control device to read out the software package, first read information indicating that the software package is readable from the first memory space is set in the setting memory space and the second memory space is set as a non-readable memory space not related to reading of the software package by the processing unit;
when an updating software package is written in the second memory space, second read information indicating that the software package is readable from the second memory space is set in the setting memory space, and the second memory space is set as the readable memory space while the first memory space is set as the non-readable memory space;
while the software package is stored in the second memory space as the readable memory space, the second read information is set in the setting memory space and the first memory space is set as the non-readable memory space;
when the updating software package is written in the first memory space, the first read information is set in the setting memory space, and the first memory space is set as the readable memory space while the second memory space is set as the non-readable memory space;
the terminal device comprises a computer, and
the program causes the computer to execute steps including: a retrieval control step of retrieving information set in the setting memory space; and a writing control step of, based on the information retrieved in the retrieval control step, writing the updating software package in a memory space, out of the first memory space and the second memory space, set as the non-readable memory space.
